# EUROPÄISCHE PATENTSCHRIFT

(11) **EP 3 684 519 B1**
(45) Veröffentlichungstag und Bekanntmachung des Hinweises auf die Patenterteilung: **06.08.2025**
(21) Anmeldenummer: 18769977.2
(22) Anmeldetag: 11.09.2018
(51) Int. Cl.: B05C 5/02, B05C 11/10

(54) **DOSIERSYSTEM MIT AKTOREINHEIT UND LÖSBAR KOPPELBARER FLUIDIKEINHEIT**
METERING SYSTEM HAVING AN ACTUATOR UNIT AND HAVING A FLUIDIC UNIT THAT CAN BE DETACHABLY COUPLED
SYSTÈME DE DOSAGE MUNI D'UNE UNITÉ D'ACTIONNEMENT ET D'UNE UNITÉ FLUIDIQUE POUVANT ÊTRE RACCORDÉE DE MANIÈRE DÉTACHABLE

(30) Priorität: 22.09.2017 DE 102017122034
(43) Veröffentlichungstag der Anmeldung: 29.07.2020
(73) Patentinhaber: Vermes Microdispensing GmbH, 83607 Holzkirchen (DE)
(72) Erfinder: FLIESS, Mario, 81549 München (DE)
(74) Vertreter: Beckord & Niedlich Patentanwälte PartG mbB
(86) Internationale Anmeldenummer: PCT/EP2018/074399
(87) Internationale Veröffentlichungsnummer: WO 2019/057542

(56) Entgegenhaltungen:
- EP-A1- 3 096 064
- EP-A2- 1 327 482
- DE-T5- 112014 004 938
- US-A1- 2016 339 470
- US-A1- 2017 106 398

## Beschreibung

Die Erfindung betrifft ein Dosiersystem mit einer Aktoreinheit und einer damit lösbar koppelbaren Fluidikeinheit. Des Weiteren betrifft die Erfindung eine entsprechende Fluidikeinheit sowie eine entsprechende Aktoreinheit für ein solches Dosiersystem und ein Verfahren zur werkzeuglos lösbaren Kupplung einer Fluidikeinheit mit einer Aktoreinheit eines Dosiersystems.

Dosiersysteme der eingangs genannten Art werden dazu genutzt, um in verschiedensten Anwendungen ein zu dosierendes Medium, in der Regel ein flüssiger bis zähflüssiger Dosierstoff, gezielt zu dosieren. In EP 1 327 482 A2 wird beispielsweise ein solches Dosiersystem für ein Fluid offenbart. In vielen Anwendungen der sogenannten "Mikrodosiertechnik" ist es dabei erforderlich, sehr geringe Mengen des Mediums punktgenau auf eine Zieloberfläche zu bringen, ohne dass das Dosiersystem selber mit der Zieloberfläche in Kontakt tritt (Ein solches kontaktloses Verfahren wird häufig auch als "Jet-Verfahren" bezeichnet). Ein typisches Beispiel hierfür ist die Dosierung von Klebstoffpunkten, Lötpasten etc. bei der Bestückung von Leiterplatinen oder anderen elektronischen Elementen, oder die Aufbringung von Konverter-Materialien für LEDs. Eine besondere Herausforderung besteht dabei darin, das Medium hochgenau, d. h. zum richtigen Zeitpunkt, am richtigen Ort und in einer exakt dosierten Menge auf die Zieloberfläche zu befördern.

Dies wird dadurch erreicht, dass eine tröpfchenweise Abgabe über eine Düse des Dosiersystems erfolgt, wobei die Größe der Tröpfchen bzw. die Menge des Mediums pro Tröpfchen durch den Aufbau und Ansteuerung und die dadurch erzielte Wirkung der Düse möglichst genau vorherbestimmbar sind. Ein bevorzugtes Verfahren ist hierbei Ausstoß der einzelnen Tröpfchen in einer Art "Ink-Jet-Verfahren", wie es u. a. auch in Tintenstrahldruckern genutzt wird (manchmal auch "offenes System" genannt). Die Düse weist in der Regel eine sehr geringe Düsenöffnung auf, in bzw. vor der ein bewegliches Verschlusselement bzw. "Ausstoßelement" beweglich in der Düse angeordnet ist. Bei diesem Verschlusselement bzw. Ausstoßelement handelt es sich meist um einen feinen Stößel oder Ähnliches, der im Inneren der Düse mit relativ hoher Geschwindigkeit in Richtung der Düsenöffnung nach vorne gestoßen wird, wodurch ein Tropfen des Mediums ausgestoßen wird. Für den erneuten Ausstoß eines Tropfens wird dieser wieder zurückgezogen. Bei den meisten Systemen kann der Stößel zudem in eine Verschlussstellung gebracht werden, in dem er in der Düse am Dichtsitz der Düsenöffnung fest anschließt und dort verbleibt, um vorübergehend das Dosiersystem zu verschließen. Bei zähflüssigeren Dosierstoffen kann es ausreichen, dass der Stößel einfach in der Rückzugsstellung, d. h. vom Düsensitz entfernt verbleibt, ohne dass ein Tropfen des Mediums austritt. Bei wieder anderen Dosiersystemen ist es so, dass die Düse durch ein Zurückziehen des Verschlusselements vom Dichtsitz der Düse kurzzeitig geöffnet wird und dadurch ein Tropfen des Dosiermediums, z. B. aufgrund der Schwerkraft und/oder des Drucks in der Düse, aus der Düse austreten kann. Anschließend wird durch ein Bewegen des Verschlusselements bzw. Ausstoßelements an dem Dichtsitz die Düse wieder verschlossen.

Die Bewegung des Verschlusselements bzw. Ausstoßelements, also zum Beispiel des Stößels, erfolgt mit Hilfe eines Aktorsystems. Ein solches Aktorsystem kann auf verschiedene Weise realisiert werden, z. B. mit einer Anzahl von piezoelektrischen Aktorelementen, mit einem oder mehreren hydraulisch, pneumatisch und/oder elektromagnetisch betriebenen Aktoren etc. Der Aktor bzw. die Aktorelemente des Aktorsystems kann je nach konkretem Aufbau direkt auf das Verschlusselement bzw. Ausstoßelement (also z. B. den Stößel) wirken oder indirekt über eine Bewegungsmechanik des Aktorsystems.

Die vorliegende Erfindung kann bei allen vorgenannten Varianten unabhängig vom konkreten Ausstoßprinzip, d. h. bei einem Jet-Verfahren, einem offenen Ink-Jet-Verfahren oder mit einem klassischen Verschlusselement, und unabhängig vom prinzipiellen Aufbau des Aktorsystems eingesetzt werden.

Das zu dosierende Medium selber wird in der Regel durch einen Zuführkanal möglichst direkt zur Düse befördert und kommt dort nur mit dem Innenraum der Düse und meist nur einem vorderen Bereich des Verschlusselements bzw. Ausstoßelements, also beispielsweise der Spitze des Stößels, in Kontakt. Wenn bei der Dosierung ein Fehler auftritt, ist bei den bekannten Mikrodosiersystemen in den meisten Fällen davon auszugehen, dass es sich nicht um ein Problem des Aktorsystems handelt, sondern auf irgendeine Weise die Düse des Dosiersystems oder eine Zuleitung für das Medium etc. verstopft sind oder die Topfzeit des Mediums überschritten wurde. In diesem Fall ist es von Vorteil, die Düse mitsamt den Zuleitungen möglichst schnell austauschen zu können, ohne das Aktorsystem verändern zu müssen. Auch bei einem Wechsel des Mediums wäre dies von Vorteil, da dann Düse und Zuleitungen zunächst vom Medium gereinigt werden müssen, bevor ein anderes Medium verwendet wird.

Daher ist das erfindungsgemäße Dosiersystem, wie eingangs erwähnt, vorteilhafterweise in eine Aktoreinheit und eine Fluidikeinheit unterteilt, die miteinander lösbar koppelbar sind. Unter der Fluidikeinheit wird hierbei im Folgenden das Bauteil bzw. die Baugruppe genannt, die die Düse zum Dosieren des Mediums umfasst sowie die Zuleitung des Mediums zur Düse, d. h. alle Teile, die direkt mit dem Medium in Kontakt stehen sowie außerdem die Elemente, die erforderlich sind, um die betreffenden, mit dem Medium in Kontakt stehenden Teile zusammen zu montieren bzw. in ihrer Position an der Fluidikeinheit (welche auch als Fluidik-Baugruppe bezeichnet werden könnte) zu halten. Unter einer Aktoreinheit soll im Folgenden eine Baugruppe verstanden werden, die die Komponenten enthält, die für den Antrieb des Verschlusselements bzw. Ausstoßelements, also beispielsweise Stößels, in der Düse sorgen. Die Aktoreinheit (welche auch als Aktor-Baugruppe, Antriebseinheit oder dergleichen bezeichnet werden könnte) enthält also insbesondere das Aktorsystem mit einem oder mehreren Aktorelementen und gegebenenfalls eine Bewegungsmechanik, um das bewegliche Element der Fluidikeinheit (also das Verschlusselement bzw. Ausstoßelement) betätigen zu können. Zudem kann die Aktoreinheit Elemente umfassen, um alle Teile der Aktoreinheit zusammen zu montieren bzw. in ihrer Position an der Aktoreinheit zu halten und gegebenenfalls eine Steuereinheit und/oder eine Schnittstelle zu einer (gegebenenfalls weiteren) Steuereinheit, um das Aktorsystem ansteuern zu können.

Bei vielen auf dem Markt erhältlichen Dosiersystemen gibt es bereits eine solche Trennung zwischen Aktoreinheit und Fluidikeinheit. Jedoch sind diese relativ umständlich miteinander zu koppeln, da sie miteinander verschraubt oder durch andere Befestigungselemente, die mit geeignetem Werkzeug betätigt werden müssen, aneinander montiert werden müssen. In der EP3095521A1 ist zudem ein elektrisches Jet-System beschrieben, bei der unterseitig an einer piezoelektrisch betriebenen Aktoreinheit ein Klappmechanismus mit einem klappenartigen Träger angeordnet ist, in den eine Fluidikeinheit eingelegt werden kann. Anschließend wird dieser Träger nach oben geklappt. Der Träger wird außen am Gehäuse in der hochgeklappten Stellung verankert, sodass die Fluidikeinheit und die Aktoreinheit zusammengepresst werden. Hierdurch ist bereits eine schnellere Kupplung von Fluidikeinheit und Aktoreinheit möglich, jedoch ist dies immer noch relativ umständlich, da zunächst die Fluidikeinheit in dem Träger des Klappmechanismus positioniert werden muss, der Träger dann hochgeschwenkt werden muss und in geeigneter Weise blockiert bzw. verankert werden muss. Die Befestigung der Fluidikeinheit an der Aktoreinheit kann dabei nur mit genau einer relativen Positionierung von Fluidikeinheit und Aktoreinheit zueinander erfolgen, was zudem dazu führt, dass auch die Medium-Zuführung und/oder ein Medium-Reservoir, welches sich an der Fluidikeinheit befindet, immer an der gleichen Position bzw. Seite in Bezug zur Aktoreinheit angeordnet sein muss. Hierbei ist zu berücksichtigen, dass ein Wechsel der Fluidikeinheit an einem Dosiersystem in der Regel nicht stattfindet, wenn das Dosiersystem (wie z. B. bei einer Erstmontage) auf dem Tisch vor dem Monteur liegt, sondern in sehr beengten Platzverhältnissen in einem größeren Anlagenkomplex, Seite an Seite mit einer Vielzahl von weiteren Dosiersystemen, einem Gewirr von Zuleitungsschläuchen und Kabeln etc. Hier ist die Zugänglichkeit zum Dosiersystem von verschiedenen Seiten nicht immer gewährleistet, sodass auch bei dem Dosiersystem mit dem Klappmechanismus der Wechsel der Fluidikeinheit unter Umständen problematisch sein kann.

Es ist eine Aufgabe der vorliegenden Erfindung, ein bezüglich der lösbaren Kupplung der Fluidikeinheit mit der Aktoreinheit verbessertes Dosiersystem und eine hierzu nutzbare Fluidikeinheit und eine Aktoreinheit sowie ein Verfahren zur lösbaren Kopplung einer Fluidikeinheit mit einer Aktoreinheit anzugeben.

Diese Aufgabe wird durch ein Dosiersystem gemäß Patentanspruch 1, eine Fluidikeinheit gemäß Patentanspruch 13, eine Aktoreinheit gemäß Patentanspruch 14 sowie durch ein Verfahren gemäß Patentanspruch 15 gelöst.

Bei dem erfindungsgemäßen Dosiersystem weist die Fluidikeinheit bzw. Fluidik-Baugruppe, wie oben erwähnt, eine Düse und ein beweglich gelagertes Element (bzw. Verschluss- und Ausstoßelement), z. B. einen Stößel, auf. Die Aktoreinheit bzw. Aktor-Baugruppe weist ein Aktorsystem auf, um das bewegliche Element der Fluidikeinheit zu betätigen. Erfindungsgemäß weist die Fluidikeinheit ein erstes Steckkupplungsteil und die Aktoreinheit ein zweites Steckkupplungsteil auf, die zur Kupplung der Fluidikeinheit an die Aktoreinheit entlang einer (virtuellen bzw. gedachten) Steckachse ineinander steckbar und dabei in sich miteinander verkoppelbar sind. D. h. das erste Steckkupplungsteil der Fluidikeinheit und das zweite Steckkupplungsteil der Aktoreinheit (welches auch als "Gegen-Steckkupplungsteil" bezeichnet werden könnte) wirken so zusammen, dass sie nicht nur ineinander gesteckt werden, sondern durch eine spezielle Ausbildung dieser Stecckupplungsteile mit entsprechend zusammenwirkenden Mitteln unmittelbar in den Stecckupplungsteilen eine lösbare Fixierung der Steckkupplungsteile ineinander möglich ist. Auf diese Weise bilden die Steckkupplungsteile eine Schnellkupplung, welche eine werkzeuglose Kupplung der Fluidikeinheit, also der kompletten Fluidik-Baugruppe, d. h. mitsamt ihren Bestandteilen, insbesondere der Düse und dem beweglich gelagerten Element, an die Aktoreinheit und auch einen entsprechend werkzeugloses Lösen der Fluidikeinheit von der Aktoreinheit erlaubt. Durch die Möglichkeit der unmittelbaren Kopplung der Steckkupplungsteile in sich, ergeben sich je nach konkreter Ausgestaltung der zur Kupplung der Steckkupplungsteile zusammenwirkenden Elemente weitere Vorteile, die später noch detailliert erläutert werden. "Unmittelbare Kopplung" heißt hierbei, dass keine weiteren Fixiermittel benötigt werden, außer die zusammenwirkenden Mittel unmittelbar in den Steckkupplungsteilen, die in einem ineinander gesteckten Zustand der Steckkupplungsteile miteinander wechselwirken bzw. wechselwirken können. Anders als dies bei bisherigen Dosiersystemen der Fall ist, erfolgt die Kupplung also ohne solche zusätzliche Fixierelemente, beispielsweise in Form von zusätzlichen Schrauben oder anderen Fixierteilen, die mit Hilfe von Werkzeug zusätzlich für die Kopplung an der Fluidikeinheit und/oder der Aktoreinheit montiert werden müssen und zum Lösen der Kopplung wieder mittels Werkzeugen gelöst, insbesondere wieder entfernt, werden müssen. Vorzugsweise verläuft die Steckachse parallel, besonders bevorzugt koaxial zur Ausstoßrichtung, in der das zu dosierende Medium aus der Düse der Fluidikeinheit ausgestoßen wird bzw. austritt. Auch ist es nicht erforderlich, die verschiedenen Teile bzw. Elemente der Fluidikeinheit, die mit dem Medium in Kontakt stehen, wie beispielsweise das Verschluss- bzw. Ausstoßelement (z. B. den Stößel), in verschiedenen Arbeitsgängen an die Aktoreinheit zu montieren bzw. von dieser wieder abzumontieren, sondern es werden einfach die beiden Baugruppen als solche verkoppelt und wieder getrennt.

Bei einem erfindungsgemäßen Verfahren zur lösbaren Kopplung einer Fluidikeinheit mit einer Aktoreinheit eines Dosiersystems werden erfindungsgemäß die Steckkupplungsteile der Fluidikeinheit und der Aktoreinheit entlang der (virtuellen bzw. gedachten) Steckachse ineinander versteckt und in sich unmittelbar miteinander gekoppelt. Bei einem zusammenmontierten Dosiersystem mit einer bereits an die Aktoreinheit gekoppelten Fluidikeinheit sind das erste Steckkupplungsteil und das zweite Steckkupplungsteil ineinander gesteckt und vorteilhafterweise, wie beschrieben, in sich miteinander verkoppelt.

Eine erfindungsgemäße Fluidikeinheit, welche auch als "Wechsel-Fluidikeinheit" oder sogar "Schnellwechsel-Fluidikeinheit" bezeichnet werden kann, für ein solches Dosiersystem muss entsprechend der Erfindung ein erstes Steckkupplungssystem aufweisen, welches entlang der (gedachten) Steckachse in oder über ein zweites Steckkupplungsteil einer Aktoreinheit des Dosiersystems steckbar und mit diesem in sich koppelbar ist, um die Fluidikeinheit wie beschrieben lösbar mit der Aktoreinheit zu koppeln, so dass das Aktorsystem der Aktoreinheit bzw. Aktor-Baugruppe das beweglich gelagerte Element der Fluidikeinheit betätigen kann. Die Fluidikeinheit kann im Übrigen in beliebiger Weise mit nahezu beliebigen Komponenten aufgebaut sein, d. h. es kann sich wie oben beschrieben um eine Baugruppe handeln, die in üblicher Weise eine Düse zum Dosieren des Mediums sowie die Zuleitung für das Medium umfasst sowie ein in der Düse vorhandenes bewegliches Element, wie das Verschluss- und/oder Ausstoßelement (also z. B. den Stößel) und die weiteren Komponenten, die einen direkten Kontakt zum Medium haben oder deren Zuordnung zur Fluidikeinheit sinnvoll ist, insbesondere solche Elemente und Komponenten, die dazu dienen, das bewegliche Verschluss- bzw. Ausstoßelement in der Düse zu lagern. Die Fluidikeinheit umfasst vorzugsweise auch einen Anschluss, beispielsweise einen Schlauchanschluss oder dergleichen, über den das Medium in die Fluidikeinheit zugeführt wird, und/oder ein Reservoir für das Medium, welches direkt mit der Fluidikeinheit gekoppelt ist bzw. auch als (austauschbares) Teil der Fluidikeinheit betrachtet werden kann.

Eine erfindungsgemäße Aktoreinheit weist erfindungsgemäß ein zweites Steckkupplungsteil auf, welches entlang einer (gedachten) Steckachse in oder über ein erstes Steckkupplungsteil einer Fluidikeinheit des Dosiersystems steckbar und mit diesem in sich kuppelbar ist, um die Fluidikeinheit lösbar mit der Aktoreinheit zu koppeln. Auch diese Aktoreinheit kann im Übrigen beliebig aufgebaut sein und einen beliebigen Mechanismus bzw. Aktorelemente wie mechanische Elemente, pneumatische, hydraulische und/oder elektrische, insbesondere elektromechanische Elemente, insbesondere piezoelektrische Aktoren, aufweisen. Die Aktoreinheit sollte einen Anschluss zur Ansteuerung der Aktorelemente aufweisen, gegebenenfalls kann die Aktoreinheit selber auch eine Steuerung umfassen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer beliebigen anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Besonders bevorzugt sind die Fluidikeinheit, insbesondere das Steckkupplungsteil, und die Aktoreinheit, insbesondere dessen Gegen-Steckkupplungsteil, derart ausgebildet, dass die Fluidikeinheit unter zumindest zwei verschiedenen Kopplungspositionen bzw. Drehstellungen um die Steckachse verdreht an die Aktoreinheit ankoppelbar ist. D. h. die Ausgestaltung ist so, dass verschiedene Kopplungspositionen von Aktoreinheit und Fluidikeinheit zueinander hinsichtlich der Steckachse möglich sind. Besonders bevorzugt unterscheiden sich diese Drehstellungen bzw. Kopplungspositionen um einen Winkel von mindestens 60°, vorzugsweise ca. 90°. Bei einer ganz besonders bevorzugten Ausgestaltung gibt es mindestens drei verschiedene Drehstellungen von drei verschiedenen Seiten aus. Vorzugsweise können diese Drehstellungen jeweils um ca. 90° zueinander versetzt sein.

Um die Kopplung der Steckkupplungsteile in sich zu erreichen, weisen das erste Stecckupplungsteil und das zweite Steckkupplungsteil jeweils zusammenwirkende Vorsprünge (bzw. Erhebungen) und/oder Ausnehmungen auf. Diese Vorsprünge und/oder passenden Ausnehmungen im ersten Steckkupplungsteil und im zweiten Steckkupplungsteil können dabei so ausgebildet sein, dass die Steckkupplungsteile bajonettverschlussartig in sich gekoppelt werden können, wobei die Steckkupplungsteile in einer ersten Drehstellung bezogen auf die Steckachse zunächst ineinandergeschoben werden und dann das erste und zweite Steckkupplungsteil um die Steckachse so gegeneinander verdreht werden, dass sie ohne eine Verdrehung nicht wieder auseinandergezogen werden können.

Dabei ist es, wie später noch erläutert wird, möglich, dass sowohl das erste Steckkupplungsteil und das zweite Steckkupplungsteil Erhebungen aufweisen, die bajonettverschlussartig zusammen wirken. Beispielsweise können Erhebungen am ersten Stecckupplungsteil und am zweiten Steckkupplungsteil wie "Zähne" in einer ersten Drehstellung, bezogen auf die Steckachse, zunächst aneinander vorbeigeschoben werden und dann das erste Steckkupplungsteil und zweite Steckkupplungsteil um die Steckachse so gegeneinder verdreht werden, dass die Zähne hintereinander greifen. Es ist aber auch ebenso möglich, dass ein Steckkupplungsteil entsprechende Vorsprünge und das andere Steckkupplungsteil hierzu passende Ausnehmungen aufweist, beispielsweise zumindest einen in Längsrichtung der Steckachse verlaufenden ersten Kanal an einem Steckkupplungsteil und zumindest eine passenden Erhebung (bzw. Zahn) am anderen Steckkupplungsteil, das beim Ineinanderstecken der Steckkupplungsteile in dem Kanal verläuft und einem an den ersten Kanal anschließenden azimutal um die Steckachse verlaufenden Kanalabschnitt, um die Erhebung darin durch eine Verdrehung der Steckkupplungsteile gegeneinander zu verankern.

Mit zusammenwirkenden Vorsprüngen und/oder Ausnehmungen, insbesondere zur Ausbildung einer Art Bajonettverschluss, ist bereits eine sichere werkzeuglose Fixierung, welche ebenso ohne Werkzeug wieder lösbar ist, der beiden Steckkupplungsteile ineinander möglich, ohne dass es weiterer Fixierungen zwingend bedarf.

Alternativ oder zusätzlich kann das Dosiersystem auch einen Mechanismus, beispielsweise einem Exzentermechanismus, aufweisen, welcher ausgebildet ist, um das erste Stecckupplungsteil und das zweite Steckkupplungsteil in einer ineinander gesteckten Position gegeneinander zu drücken. Dabei ist der Mechanismus, insbesondere der Exzentermechanismus, vorzugsweise so ausgebildet, dass er die beiden ineinander steckenden Steckkupplungsteile radial zur Steckachse gegeneinander drückt.

Ein derartiger Mechanismus, insbesondere Exzentermechanismus, hat den Vorteil, dass die Steckkupplungsteile nach dem Andrücken durch den Exzentermechanismus spielfrei ineinander gehalten werden. Dies erlaubt größere Toleranzen bei der Fertigung der Steckkupplungsteile und somit eine kostengünstigere Herstellung.

Besonders bevorzugt sind das erste und/oder das zweite Steckkupplungsteil als Drehteile hergestellt. Dies erlaubt die Herstellung in einem Drehprozess, welcher mit ausreichend hoher Genauigkeit realisierbar und dabei kostengünstiger als zum Beispiel ein Fräsprozess ist.

Ein solcher Mechanismus bzw. Exzentermechanismus kann alleine zur Sicherung der Steckkupplungsteile ineinander genutzt werden. Bevorzugt ist aber eine Kombination mit den am ersten und zweiten Steckkupplungsteil vorhandenen Vorsprüngen und/oder Ausnehmungen, beispielsweise unter Bildung eines Bajonettverschlusses mit zusätzlicher Sicherung durch den Mechanismus bzw. Exzentermechanismus.

Der Mechanismus bzw. Exzentermechanismus, ist bevorzugt so ausgebildet, dass er auf ein inliegendes Steckkupplungsteil der zwei Steckkupplungsteile wirkt und dieses dann gegen eine Innenwand eines außenliegenden Steckkupplungsteils der zwei Steckkupplungsteile drückt.

Besonders bevorzugt wirkt der Mechanismus bzw. Exzentermechanismus über ein Anpresselement, beispielsweise eine Presskugel, auf zumindest eines der zwei Steckkupplungsteile. Diese Presskugel kann dann, zur Verklemmung der beiden Steckkupplungsteile gegeneinander, in der passenden Stellung des Exzentermechanismus bzw. Exzenter-Hebels an einer Stelle aus einer Innenwandwand des außenliegenden Steckkupplungsteils heraus und gegen das innenliegende Steckkupplungsteil drücken. Das innenliegende Steckkupplungsteil kann an seiner Außenseite mindestens eine, vorzugsweise mehrere, zum Anpresselement passende (z. B. kalottenförmige) und an der passenden Stelle angeordnete Ausnehmung(en) aufweisen, in die das Anpresselement hineindrücken kann. Die Anzahl der Ausnehmungen kann beispielsweise entsprechend der Anzahl der möglichen Drehstellungen gewählt sein.

Eine bevorzugte Alternative zu einem Exzentermechanismus wäre ein Mechanismus, bei dem ein solches Anpresselement, beispielsweise auch hier eine Presskugel, durch eine Feder dauerhaft vorgespannt ist. Diese Presskugel ragt dann unter der Federbelastung ein Stück an einer Stelle aus der Innenwand des außenliegenden Steckkupplungsteils heraus und drückt bei eingestecktem innenliegendem Steckkupplungsteil gegen dessen Außenwand. D.h. dieser Mechanismus weist ein entsprechendes Anpresselement und eine Druckfeder auf. Auch bei dieser Variante kann das innenliegende Steckkupplungsteil wieder an seiner Außenseite mindestens eine, vorzugsweise mehrere, passende, z.B. kalottenförmige, und an der passenden Stelle angeordnete Ausnehmung(en) für das Anpresselement aufweisen. Auch hier entspricht die Anzahl der Ausnehmungen bevorzugt der Anzahl der möglichen Drehstellungen.

Beim Einstecken des innenliegenden Steckkupplungsteils in das äußere Steckkupplungsteil wird dann das Anpresselement einfach entgegen der Federkraft in die Wand des äußeren Steckkupplungsteil zurückgedrückt, bis es schließlich in einer richtigen relativen Stellung der Steckkupplungsteile zueinander in eine der Ausnehmungen einrastet. Bei diesem Mechanismus wird zwar keine so große Klemmkraft ausgeübt, wie mit einem Exzentermechanismus. Dafür kann aber auf eine Hebelbetätigung verzichtet werden. Der gesamte Mechanismus ist einfacher aufgebaut. Durch die Federkraft wird dabei auch eine seitliche Vorspannung gewährleistet, durch die ausreichend Spiel aus dem Aufbau genommen wird.

Grundsätzlich könnte das zweite Steckkupplungsteil der Aktoreinheit in ein entsprechend angepasstes erstes Steckkupplungsteil der Fluidikeinheit eingesteckt werden. Besonders bevorzugt weist jedoch die Fluidikeinheit als erstes Steckkupplungsteil ein männliches Steckkupplungsteil in Form eines Anschlussstutzens auf. Die Aktoreinheit weist dann entsprechend als zweites Steckkupplungsteil ein weibliches Steckkupplungsteil auf, in Form einer Aufnahme für den Anschlussstutzen der Fluidikeinheit. Bei dieser bevorzugten Ausgestaltung kann dann die Aktoreinheit bzw. ein Aktoreinheitanschlussstück, insbesondere das zweite Steckkupplungsteil, den Mechanismus bzw. Exzentermechanismus aufweisen.

Dieser kann dann ausgebildet sein, um den in der Aufnahme befindlichen Anschlussstutzen der Fluidikeinheit gegen eine Wandung der Aufnahme der Aktoreinheit zu drücken.

Die meisten üblicherweise mit dem erfindungsgemäßen Dosiersystem zu dosierenden Medien weisen eine signifikante Temperaturabhängigkeit der Viskosität auf. Um das Medium für die Dosierung ausreichend flüssig zu halten, weist das Dosiersystem bevorzugt eine integrierte Heizeinrichtung auf, welche zum Beheizen des zu dosierenden Mediums bzw. Fluids verwendet werden kann.

Diese integrierte Heizeinrichtung kann sich in der Fluidikeinheit befinden.

Besonders bevorzugt weist diese Heizeinrichtung einen Heizblock auf, welcher zumindest einen Zuführkanalabschnitt für das Medium und/oder zumindest einen Düsenabschnitt umgibt. Ein solcher Heizblock ist vorzugsweise aus einem gut wärmeleitfähigen Material, beispielsweise einem Metall wie Kupfer. Der Zuführkanalabschnitt für das Medium bzw. der Düsenabschnitt sind dagegen vorzugsweise selber aus einem Material gefertigt, welches möglichst resistent gegen das zu dosierende Medium ist, beispielsweise aus Edelstahl.

Alternativ oder zusätzlich kann die Aktoreinheit, vorzugsweise das zweite Steckkupplungsteil, eine Heizeinrichtung aufweisen. Bei einer an die Aktoreinheit gekoppelten Fluidikeinheit kann von dort Wärme an einen Zuführkanalabschnitt und/oder einen Düsenabschnitt der Fluidikeinheit abgegeben werden, z. B. über Wärmeleitung. Diese Heizeinrichtung kann zum Beispiel eine oder mehrere Heizleitungen bzw. Heizplatinen (Platinen mit geeigneten Widerständen) und gegebenenfalls auch Sensoren zur Wärmemessung umfassen, die innerhalb des Steckkupplungsteils und/oder am Steckkupplungsteil angeordnet sind. Die Steckkupplungsteile der Fluidikeinheit und der Aktoreinheit sind dann vorzugsweise so miteinander gekoppelt, dass eine gute Wärmeleitung zumindest in Richtung der Fluidikeinheit gegeben ist.

Besonders bevorzugt sind der Zuführkanalabschnitt und/oder zumindest der Düsenabschnitt lösbar, d. h. also austauschbar, in einem Materialblock (welche auch als "Fluidik-Körper" bezeichnet werden könnte), fixiert. Dabei können vorzugsweise der Zuführkanalabschnitt und/oder der Düsenabschnitt im Materialblock mittels eines Klemmmechanismus, bevorzugt umfassend eine Klemmschraube, fixiert sein.

Wenn die Fluidikeinheit eine Heizeinrichtung aufweisen soll, kann dieser Materialblock zum Beispiel als Heizblock ausgebildet sein. Beispielsweise kann er aus besonders gut leitendem Material gefertigt sein und Ausnehmungen, z. B. Bohrungen oder dergleichen, aufweisen, in welchem dann Heizleiter und/oder Sensoren für die Heizeinrichtung angeordnet sind. Vorzugsweise ist dieser Heizblock dann von einem isolierenden Rahmenteil bzw. einer Umhüllung umgeben, um die Fluidikeinheit auch im heißen Zustand des Heizblocks noch anfassen zu können.

Sofern die Heizeinrichtung der Aktoreinheit zugeordnet ist, insbesondere sich in und/oder an dessen Steckkupplungsteil befindet, und in der Fluidikeinheit keine Heizeinrichtung erforderlich ist, kann der Materialblock auch aus einem hitzeresistenten Kunststoff ausgeführt sein (z.B. PEEK). Dadurch ergibt sich weniger aufzuheizendes Material in der Fluidikeinheit, was gegebenenfalls zu einem schnelleren Erreichen der Solltemperatur führen kann. Zudem könnte die Fluidikeinheit dann auch bei aufgeheizter Heizvorrichtung angefasst und demontiert werden, da der hitzeresistente Kunststoff isolierend wirkt und angefasst werden kann.

Weiterhin ist es bevorzugt, wenn benachbarte Zuführkanalabschnitte und/oder der Düsenabschnitt durch Dichtkegel zur Bildung einer durchgehenden Zuleitung endseitig dicht ineinander gepresst werden, um so eine durchgehende Materialzuführleitung bis in die Düse hinein zu erreichen. Beispielsweise könnte die Klemmschraube bei einer bevorzugten Variante so ausgebildet sein, dass sie entlang einer in Längsrichtung eines - vom Materialblock umgebenen - Teils eines Zuführkanalabschnitts und/oder Düsenabschnitts verlaufenden Schraubachse in den Materialblock hineinschraubbar ist und somit die Zuführkanalabschnitte bzw. den Düsenabschnitt endseitig jeweils in axialer Richtung gegeneinander, bzw. mit Hilfe der Dichtkegel ineinander, presst.

Die Heizeinrichtung ist mittels eines Heizungssteueranschlusses mit einer Heizungssteuerung verbindbar, welche im Betrieb die Heizeinrichtung steuert, vorzugsweise auf eine gewünschte (Soll-)Temperatur regelt, um das Medium auf der gewünschten Temperatur zu halten.

Ganz besonders bevorzugt umfasst die Heizeinrichtung, insbesondere die Fluidikeinheit und/oder die Aktoreinheit, eine Speichereinheit (z. B. ein EEPROM oder dergleichen), in welcher Daten gespeichert sind, die der Aktoreinheit und/oder der Fluidikeinheit, insbesondere der Heizeinrichtung, zugeordnet sind, und die an die Heizungssteuerung übergeben werden bzw. von dieser ausgelesen werden können, wenn die Heizungssteuerung an den Heizungssteueranschluss angeschlossen wird, um sie mit der Aktoreinheit und/oder Fluidikeinheit bzw. der Heizeinrichtung zu verbinden. Der Heizungssteueranschluss kann beispielsweise eine Steckverbindung (vorzugsweise mit mehreren Kontakten) oder dergleichen umfassen. Zusätzlich oder alternativ kann er aber auch eine Schnittstelle zum (zumindest teilweise) drahtlosen Anschluss der Heizungssteuerung mit der Aktoreinheit und/oder Fluidikeinheit, insbesondere der Heizeinrichtung, aufweisen, z. B. dass der Heizstrom über eine galvanische Verbindung übertragen wird und eine Datenübertragung zwischen Heizungssteuerung und Aktoreinheit und/oder Fluidikeinheit bzw. Heizeinrichtung drahtlos erfolgt.

Besonders bevorzugt können in der Speichereinheit Regelparameter zur Regelung der Heizeinrichtung durch die Heizungssteuerung hinterlegt sein. Üblicherweise weist eine Heizungssteuerung nämlich einen Regler auf, der verschiedene Regelparameter für die jeweils angeschlossene Heizeinrichtung benötigt. Durch diese Regelparameter wird die Regelcharakteristik bestimmt. Hierzu können insbesondere die sogenannten PID-Regelparameter (PID = Proportional- / Integral- / Differenzial-Anteil) zählen. Die Regelparameter können insbesondere auch geräteindividuell sein, d.h. von Fluidikeinheit zu Fluidikeinheit unterschiedlich sein oder zumindest für verschiedene Typen von Fluidikeinheiten unterschiedlich sein.

Da die Fluidikeinheit (ggf. mit der integrierten Heizeinrichtung) - wie oben erläutert - möglichst schnell austauschbar sein soll, ist die Hinterlegung der der Fluidikeinheit bzw. der Heizeinrichtung zugeordneten Daten für die Heizungssteuerung, insbesondere der genannten Regelparameter, für die automatische Übermittlung an die Heizungssteuerung von großem Interesse. Insbesondere kann dieses Merkmal auch dann zu einem schnelleren Austausch beitragen, wenn die Kopplung von Fluidikeinheit und Aktoreinheit in anderer Weise erfolgt, als dies oben beschrieben wird, beispielsweise durch eine bisher übliche Kopplungsmethode, da dann zumindest eine Neuprogrammierung bzw. separate Datenübergabe an die Heizungssteuerung nicht mehr erfolgen muss, was den Wechselvorgang auch erheblich beschleunigt. Insofern ist diese Datenhinterlegung auch eigenständig vorteilhaft.

Besonders vorteilhaft ist aber die Kombination mit der erfindungsgemäßen Schnell-Steckkupplung, bei der die Fluidikeinheit und die Aktoreinheit entlang einer Steckachse ineinandersteckbar und in sich miteinander koppelbar sind.

Im vorliegenden Fall können für jede Heizeinrichtung und/oder Fluidikeinheit werkseitig die Daten, insbesondere die Regelparameter, in der Speichereinheit hinterlegt werden. Gegebenenfalls können diese für jede einzelne Heizeinrichtung und/oder Fluidikeinheit vorher in einem Prüfvorgang ermittelt werden.

Als weitere Daten können in der Speichereinheit auch Kalibrierdaten hinterlegt sein. Diese können beispielsweise genutzt werden, um vor Ort in einer Anwendung eine Kalibrierung der Heizeinrichtung durchzuführen. Im Rahmen der Kalibrierung könnten beispielsweise Offsetwerte zur Nutzung bei großen Durchlaufmengen etc. festgelegt werden. Ebenso könnte anwendungsspezifische Solltemperaturen oder dergleichen in der Speichereinheit hinterlegt sein, die die Heizungssteuerung nutzen kann.

Weitere, in der Aktoreinheit und/oder der Fluidikeinheit und/oder der Heizeinrichtung hinterlegte Daten können Kenndaten sein, zum Beispiel eine eindeutige Kennung der Einheit, eine Typenbezeichnung oder dergleichen. Diese Kenndaten können auch als indirekte Regelparameter, Kalibrierdaten etc. angesehen werden, wenn beispielsweise in der Heizungssteuerung für verschiedene Kenndaten verschiedene Regelparameter-Sätze, Kalibrierdatensätze etc. hinterlegt sind, auf die die Heizungssteuerung dann jeweils zugreift.

Die Aktoreinheit weist wie erwähnt ein Aktorsystem mit einem oder mehreren Aktoren auf, die - wenn die Aktoreinheit und die Fluidikeinheit ordnungsgemäß miteinander verkoppelt sind - je nach konkretem Aufbau direkt oder indirekt (z.B. über eine Bewegungsmechanik) auf das Verschluss- bzw. Ausstoßelement (z. B. den Stößel) der Fluidikeinheit wirken. Beispielsweise kann in dieser verkoppelten Stellung eine Kontaktfläche eines Elements des Aktorsystems, beispielsweise eines Hebels der Bewegungsmechanik oder dergleichen, gegen eine Kontaktfläche des beweglich gelagerten Elements bzw. Verschluss- und/oder Ausstoßelements (z. B. gegen eine Kontaktfläche an einem Stößelkopf des Stößels) der Fluidikeinheit drücken, um dieses zu bewegen, insbesondere entgegen einer Federkraft, wie dies später noch erläutert wird.

Dabei kann der Aufbau so sein, dass die Kontaktfläche der Aktoreinheit, also z. B. des Hebels, (bei montierter Fluidikeinheit) permanent in Kontakt mit der Kontaktfläche des beweglichen gelagerten Elements, also z.B. des Stößels, ist. Wie später noch genauer erläutert, wäre es aber auch möglich, dass in einer Ausgangs- bzw. Ruhelage ein Abstand zwischen der Kontaktfläche der Aktoreinheit und der Kontaktfläche des beweglichen gelagerten Elements der Fluidikeinheit besteht und erst zu einer Bewegung des beweglichen gelagerten Elements der Fluidikeinheit die Kontaktflächen gegeneinander drücken. Z. B. könnte ein Hebel der Aktoreinheit bei einem Herunterschwenken zunächst frei einen bestimmten Wegabschnitt durchfahren und dann erst auf die Kontaktfläche eines Stößels der Fluidikeinheit aufschlagen.

Da der Kontakt zwischen dem Aktorsystem der Aktoreinheit und dem in der Fluidikeinheit beweglich gelagerten Element über diese Kontaktflächen erfolgt, ist dies auch eine "Trennstelle" zwischen Aktoreinheit und Fluidikeinheit, die ja erfindungsgemäß als komplette Fluidik-Baugruppe durch die Steckkupplungsteile an der Aktoreinheit und der Fluidikeinheit bzw. Fluidik-Baugruppe schnell von der Aktoreinheit getrennt und wieder mit dieser verkoppelt werden kann.

Vorzugsweise ist das Dosiersystem so ausgebildet, dass das zweite Steckkupplungsteil entlang der Steckachse relativ zu weiteren Bauteilen der Aktoreinheit verstellbar ist oder dass das erste Steckkupplungsteil entlang der Steckachse relativ zu weiteren Bauteilen der Fluidikeinheit verstellbar ist. Wie später noch erläutert, ist besonders bevorzugt das zweite Steckkupplungsteil in der Aktoreinheit verstellbar gelagert. Dadurch ist es möglich, die Lage des Verschluss- bzw. Ausstoßelements, also beispielsweise des Stößels, relativ zu dem Aktorsystem in der Aktoreinheit zu justieren. Mit einer solchen Lage- bzw. Wegjustierung kann ein Verschleiß an der Stößelspitze und/oder im Dichtsitz der Düse kompensiert werden.

Die Erfindung wird im Folgenden, unter Hinweis auf die beigefügten Figuren, anhand von Ausführungsbeispielen noch einmal näher erläutert. Dabei sind in den verschiedenen Figuren gleiche Komponenten mit identischen Bezugsziffern versehen. Es zeigen:
Figur 1 eine perspektivische Außenansicht von schräg oben auf eine Ausführungsform eines erfindungsgemäßen Dosiersystems, wobei die Fluidikeinheit mit der Aktoreinheit gekoppelt sind,
Figur 2 eine Frontansicht des Dosiersystems aus Figur 1,
Figur 3 eine weitere Frontansicht des Dosiersystems aus Figur 1, wobei jedoch die Fluidikeinheit von der Aktoreinheit getrennt ist,
Figur 4 eine perspektivische Außenansicht von schräg oben auf die Fluidikeinheit des Dosiersystems gemäß den Figuren 1 bis 3,
Figur 5 eine Schnittansicht durch die Fluidikeinheit und den unteren Teil der Aktoreinheit im gekoppelten Zustand wie in Figur 2,
Figur 6 eine weitere Schnittansicht durch die Fluidikeinheit und den unteren Teil der Aktoreinheit im entkoppelten Zustand wie in Figur 3,
Figur 7 eine Seitenansicht auf das Steckkupplungsteil der Fluidikeinheit des Dosiersystems gemäß den Figuren 1 bis 6,
Figur 8 eine perspektivische Ansicht von schräg oben auf das Steckkupplungsteil der Aktoreinheit des Dosiersystems gemäß den Figuren 1 bis 6,
Figur 9 eine Schnittansicht durch das Steckkupplungsteil entlang der Schnittebene E aus Figur 8,
Figur 10 eine Schnittansicht durch das Steckkupplungsteil aus den Figuren 7 und 8 entlang einer Schnittlinie B - B aus Figur 9,
Figur 11 eine schematische Darstellung einer möglichen Kopplung von Fluidikeinheit und Aktoreinheit eines Ausführungsbeispiels eines erfindungsgemäßen Dosiersystems von oben gesehen in verschiedenen Kopplungspositionen.

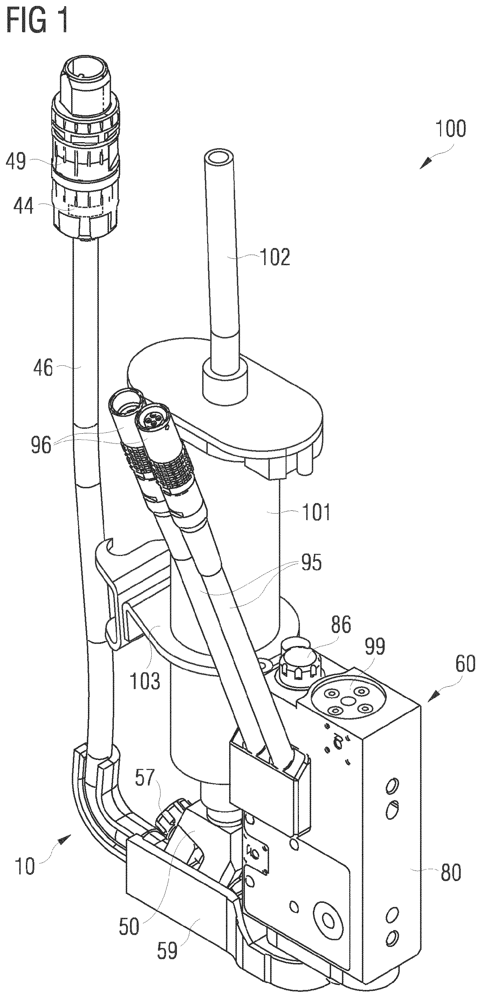

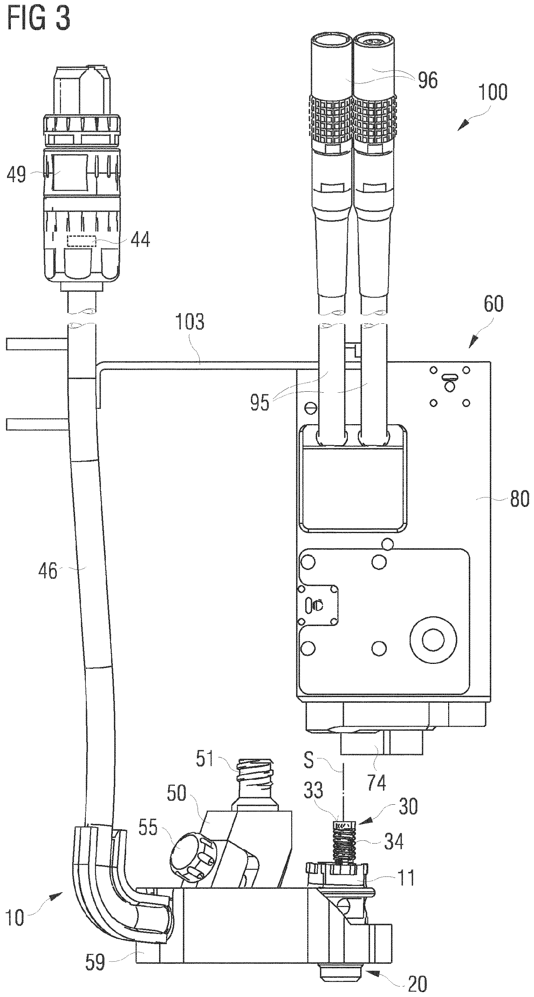

Anhand der Figuren 1 bis 10 wird nun ein konkretes bevorzugtes Ausführungsbeispiel eines erfindungsgemäßen Dosiersystems 100 erläutert. Die Figuren 1 bis 3 zeigen hierbei das Dosiersystem 100 aus verschiedenen Perspektiven bzw. in verschiedenen Kopplungszuständen.

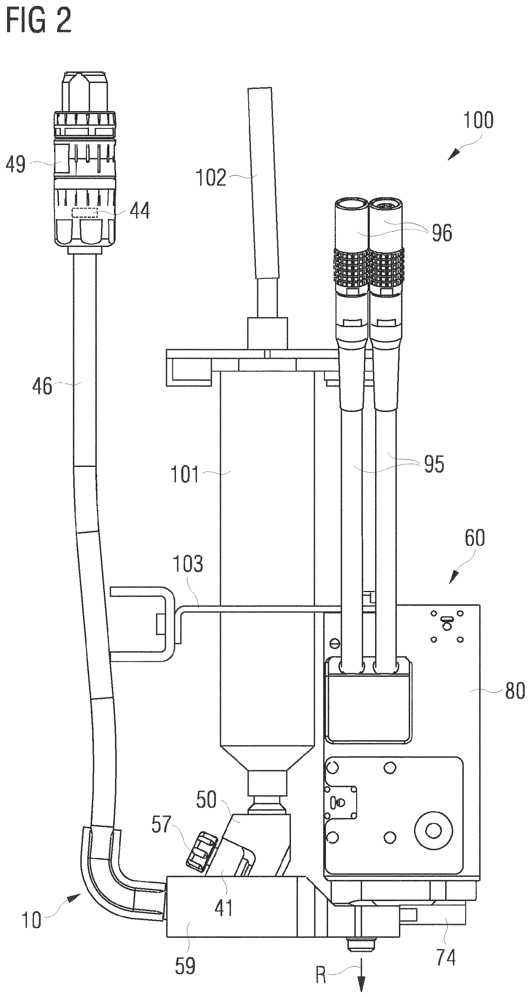

Das Dosiersystem 100 weist als zwei wesentliche Grundkomponenten eine Aktoreinheit 60 sowie eine Fluidikeinheit 10 auf. In den Figuren 1 bis 3 und 5 bis 6 ist die Dosiereinheit 100 jeweils in der üblichen Lage dargestellt, wobei die Fluidikeinheit 10 von unten an die Aktoreinheit 60 angekoppelt wird. In dieser Position befindet sich die Düse 20 (mit einem noch später erläuterten Düseneinsatz 18 mit einer Düsenöffnung 21 bzw. Düsenbohrung 21) der Fluidikeinheit 10 unten, sodass die Tropfen des Mediums in einer Ausstoßrichtung R (siehe Figur 2) nach unten ausgestoßen werden. Soweit im Folgenden die Begriffe unten und oben verwendet werden, beziehen sich diese Angaben daher immer auf eine solche, meist übliche Position des Dosiersystems 100. Dies schließt aber nicht aus, dass das Dosiersystem 100 in speziellen Anwendungen auch in einer anderen Position eingesetzt werden kann und die Tropfen beispielsweise seitlich ausgestoßen werden. Je nach Medium, Druck und genauer Konstruktion sowie Ansteuerung des gesamten Ausstoßsystems ist dies grundsätzlich auch möglich.

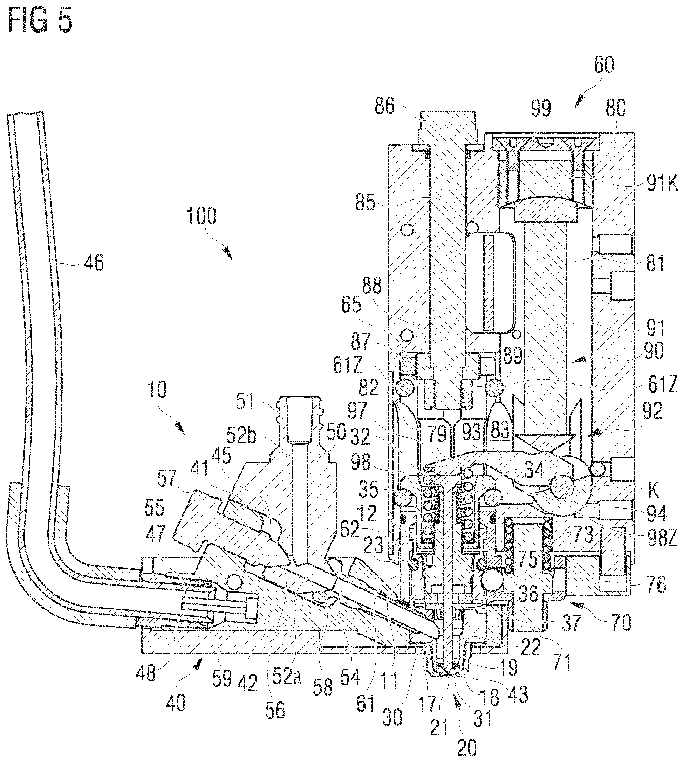

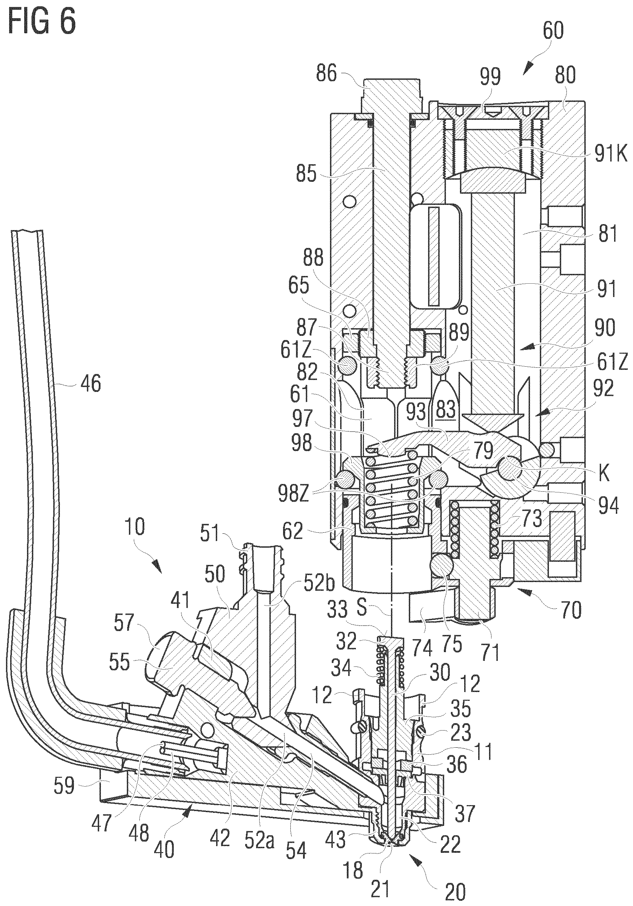

Die Aktoreinheit 60 weist in einem Gehäuseblock 80, wie später noch anhand der Schnittzeichnung in Figur 5 und Figur 6 erläutert wird, im Wesentlichen parallel nebeneinander liegende Kammern auf, nämlich zum einem eine Aktorkammer 81 mit einem darin befindlichen Aktorsystem 90 mit zumindest einem Aktor 91, und zum anderen eine Aktionskammer 82, in welche im gekoppelten Zustand ein bewegliches Ausstoßelement 30, hier ein Stößel 30, der Fluidikeinheit 10 hineinragt. Über einen Bewegungsmechanismus 92, welcher von der Aktorkammer 81 in die Aktionskammer 82 hineinragt, wird mittels des Aktorsystems 90 der Stößel 30 so betätigt, dass von der Fluidikeinheit 10 das zu dosierende Medium in der gewünschten Menge zum gewünschten Zeitpunkt ausgestoßen wird. Der Stößel 30 verschließt hier - wie später noch erläutert wird - die Düsenöffnung 21 und dient somit auch als Verschlusselement 30. Da aber der größte Teil des Mediums erst aus der Düsenöffnung 21 ausgestoßen wird, wenn der Stößel 30 sich in der Schließrichtung bewegt, wird er hier als Ausstoßelement 30 bezeichnet.

Zur Ansteuerung des Aktorsystems 90 ist das Aktorsystems 90 bzw. der Aktor 91, im vorliegenden Fall ein Piezoelement-Stapel 91 (auch "Piezostack" genannt) hierzu elektrisch bzw. signaltechnisch mit einer (hier nicht dargestellten) Steuerung verbunden. Die Verbindung zu dieser Steuerung erfolgt über Steuerkabel 95, welche endseitig mit geeigneten Aktorsystemsteueranschlüssen 96, z. B. geeigneten Steckern, verbunden ist. Die Aktoreinheit 60, insbesondere die Aktorsystemsteueranschlüsse 96, können beispielsweise mit einer geeigneten Speichereinheit (z.B. einem EEPROM oder dergleichen) versehen sein, in der Informationen wie eine Artikelbezeichnung etc. oder Regelparameter für die Aktoreinheit 60 hinterlegt sind, die dann von der Steuereinheit ausgelesen werden können, um die Aktoreinheit 60 zu identifizieren und in der passenden Weise anzusteuern. Die Steuerkabel 95 können mehrere Steuerleitungen und Datenleitungen umfassen. Da die grundsätzliche Ansteuerung von Piezoelementen aber bekannt ist, wird hierauf nicht weiter eingegangen. Wenn das Aktorsystem 90, anders als hier dargestellt, nicht elektrisch betrieben wird, sondern beispielsweise pneumatisch oder hydraulisch, könnte ein entsprechendes Steuerkabel 59 auch geeignete Schläuche oder dergleichen umfassen, um das hierzu benötigte Steuermedium zu- und abzuführen.

Die Fluidikeinheit 10 umfasst, wie ebenfalls später noch anhand der Figuren 5 und 6 erläutert wird, sämtliche Komponenten, die mit dem zu dosierenden Medium in Berührung kommen, insbesondere eine Düse 20 mit einem darin beweglich gelagerten Ausstoßelement 30 bzw. Stößel 30. In dieser Fluidikeinheit 10 befinden sich also auch die meisten Verschleißteile, welche als erstes bei einem regelmäßigen Gebrauch des Dosiersystems 100 nach bestimmten Standzeiten ausgetauscht werden sollten. Insbesondere umfasst diese Fluidikeinheit 10 auch einen Reservoiranschluss 51, an welchem eine Zuleitung für das Medium angeschlossen werden kann oder direkt ein Reservoir 101 für das Medium, beispielsweise wie hier in Figur 1 und 2 gezeigt, in Form einer Medium-Kartusche 101. Wie in Figur 1 und 2 dargestellt, befindet sich hier obenseitig an dem Reservoir 101 ein Reservoirdruckanschluss 102, über den ein ausreichender Druck auf das Medium aufgegeben werden kann, um es in Richtung der Düse 20 zu befördern. Das Reservoir 101 bzw. die Medium-Kartusche 101 kann grundsätzlich auch selbst als Teil der Fluidikeinheit 10 betrachtet werden.

Die gesamte Fluidikeinheit 10 weist, wie ebenfalls später noch genauer erläutert wird, eine Heizeinrichtung 40 auf, weshalb die Fluidikeinheit 10 hier auch ein Heizungsanschlusskabel 46 aufweist, das endseitig mit einem Heizungssteueranschluss 49 zur Verbindung mit einer Heizungssteuerung (hier nicht dargestellt) verbunden ist. Dieses Heizungsanschlusskabel 46 kann mehrere Leitungen umfassen, beispielsweise zum einen eine oder mehrere Heizungssteuerleitungen, um bei einer elektrisch betriebenen Heizeinrichtung 40, wie hier einen Heizstrom an die Heizeinrichtung 40, zu liefern, und zum anderen eine oder mehrere Messleitungen, um durch die Heizungssteuerung Werte von Temperaturfühlern abfragen und so eine ganz definierte Temperatur in der Fluidikeinheit 10 einstellen zu können, sowie gegebenenfalls eine oder mehrere Kommunikationsleitungen für den Austausch von Regelparametern und sonstigen Kenndaten auf einem z.B. EEPROM. Grundsätzlich könnte an Stelle einer elektrisch betriebenen Heizeinrichtung aber auch eine Heizeinrichtung verwendet werden, in der ein heißes Medium zugefügt wird. In diesem Fall würde das Heizungsanschlusskabel die entsprechende Leitung für das Heizmedium umfassen.

Wie aus den Figuren 1 bis 3 gut erkennbar ist, kann das Dosiersystem 100 außerdem mit einer Halterung 103 versehen sein, welche beispielsweise an dem Gehäuseblock 80 der Aktoreinheit 60 fixiert ist und an der das Reservoir 101 zur Sicherheit zusätzlich befestigt werden kann und an der auch bei montierter Fluidikeinheit 10 das Heizungsanschlusskabel 46 festgeklemmt werden kann, wenn dies gewünscht wird.

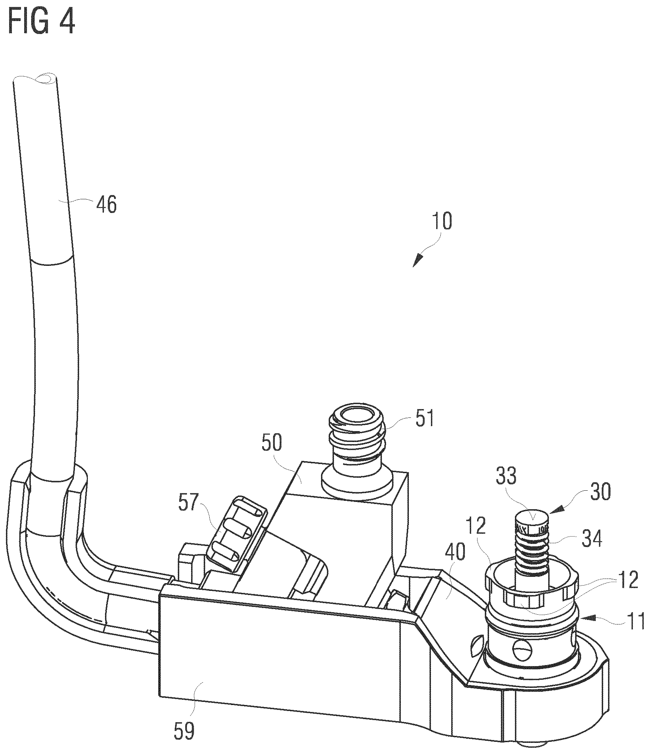

Wie in der perspektivischen Draufsicht in Figur 4 und insbesondere den Schnittdarstellungen in den Figuren 5 und 6 gut erkennbar ist, weist die Fluidikeinheit 10 hier ein Rahmenteil 59 auf, in welchem die weiteren Komponenten der Fluidikeinheit 10 angeordnet sind. Der Rahmenteil 59 kann dabei aus einem thermisch isolierenden Material, beispielsweise einem wärmebeständigen Kunststoff, bestehen, um einen gewissen Berührungsschutz zu sichern.

In den Figuren befindet sich jeweils auf der rechten Seite das Steckkupplungsteil 11 ("erstes Steckkupplungsteil") der Fluidikeinheit 10 zum Anschluss an die Aktoreinheit 60. Hierzu ragt dieses Steckkupplungsteil 11 mit einem oberen Abschnitt mit einem Anschlussstutzen 13 aus dem Rahmenteil 59 nach oben heraus, sodass es entlang einer Steckachse S in ein entsprechendes Steckkupplungsteil 61 ("zweites Steckkupplungsteil" 61, im Folgenden auch "Gegen-Steckkupplungsteil" 61 genannt) der Aktoreinheit 60 hineingesteckt und mit diesem Gegen-Steckkupplungsteil 61 verkoppelt werden kann, wie später noch genauer erläutert wird.

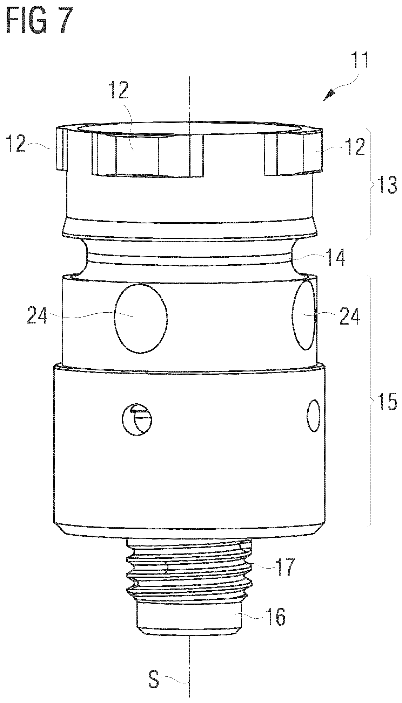

Außerdem erstreckt sich das Steckkupplungsteil 11 der Fluidikeinheit 10 mit einem Düsenabschnitt 16 (siehe Figur 7) nach unten über das Rahmenteil 59 hinaus und bildet dort einen wesentlichen Teil der Düse 20.

Wie in den Schnittdarstellungen in den Figuren 5 und 6 gut erkennbar ist, befindet sich in diesem unteren Düsenabschnitt 16 des Steckkupplungsteils 11 eine Düsenkammer 22, die nach unten offen ist und dort mit einem Düseneinsatz 18 verschlossen ist, in dem sich eine feine Düsenöffnung 21 befindet. Dieser Düseneinsatz 18 ist auf der zur Düsenkammer 22 weisenden Innenseite mit einem kegelförmig auf die Düsenöffnung 21 zulaufenden Dichtsitz 19 versehen, der mit einer Stößelspitze 31 des Stößels 30 im Inneren des Steckkupplungsteils 11 zusammenwirkt, indem der Stößel 30 mit seiner Stößelspitze in einer Verschlussstellung gegen den Dichtsitz 19 drückt. Dieser Stößel ist in einer Längsrichtung des Steckkupplungsteils 11, die koaxial zu der Steckachse S verläuft, beweglich gelagert. Die Steckachse S entspricht also auch der Bewegungsachse bzw. Längsachse des Stößels 30 und der Ausstoßrichtung R der Tropfen. Da das Steckkupplungsteil 11 vorteilhafterweise als zusätzliches Drehteil hergestellt werden kann und nur geringfügig mit anderen Techniken, beispielsweise durch Fräsen, nachbearbeitet werden muss (beispielsweise um die später noch erläuterte Verzahnung anzubringen), ist diese Steckachse S gleichzeitig auch die Drehachse des Steckkupplungsteils 11.

Zur Fixierung des Düseneinsatzes 18 mit der Düsenöffnung 21 an bzw. in der unteren stirnseitigen Öffnung des Steckkupplungsteils 11, weist das Steckkupplungsteil 11 an seinem unteren Düsenabschnitt 16 ein Gewinde 17 auf (siehe Figur 7), über das ein Düsenmantelabschnitt 43 nach Art einer Hutmutter aufgeschraubt werden kann (siehe Figuren 5 und 6). Dieser Düsenmantelabschnitt 43 kann hierbei aus einem besonders gut wärmeleitfähigen Material ausgebildet sein, vorzugsweise demselben Material, wie der noch später erläuterte Heizblock 42 der Heizeinrichtung 40 der Fluidikeinheit 10, und kann möglichst so ausgebildet sein, dass er gut wärmeleitend mit den übrigen Teilen des Heizblocks 42 Kontakt hat.

Wie weiter in den Figuren 5 und 6 zu sehen ist, ist zur Lagerung des Stößels 30 von oben, d. h. von der im montierten Zustand in Richtung der Aktoreinheit 60 weisenden stirnseitigen Öffnung aus, in das Steckkupplungsteil 11 eine Stößeldichtung 37 eingelegt, mit einer mittigen Bohrung, welche an den Durchmesser des Stößels 30 angepasst ist. Darüber ist eine Dichtungs-Stützscheibe 36 gelegt und anschließend von oben ein Stößellagerteil 35 eingeschraubt, welche ebenfalls eine passende Durchgangsbohrung für den Stößel 30 aufweist. Der Stößel 30 weist an seinem oberen, der Stößelspitze 31 gegenüberliegenden, Ende einen verbreiterten Stößelkopf 32 auf, dessen freie Stirnseite eine Kontaktfläche 33 für einen noch später erläuterten Hebel 93 des Bewegungsmechanismus 92 des Aktorsystems 90 aufweist. Auf einen sich nach oben erstreckenden Führungsabschnitt des Stößellagers 35 ist hier eine Feder 34 aufgeschoben, welche den Stößelkopf 32 vom Stößellagerteil 35 in axialer Richtung nach oben wegdrückt und somit auch die Stößelspitze 31 vom Dichtsitz 19 wegdrückt. D. h. ohne äußeren Druck von oben auf die Kontaktfläche 33 des Stößelkopfs 32 befindet sich in der Ruhelage der Feder 34 die Stößelspitze 31 in einem Abstand vom Dichtsitz 19 des Düseneinsatzes 18.

Wie insbesondere in Figur 7 zu erkennen ist, weist das Steckkupplungsteil 11 der Fluidikeinheit 10 an dem nach oben über das Rahmenteil 59 herausragenden, in das Gegen-Steckkupplungsteil 61 der Aktoreinheit 60 hineinsteckbaren Abschnitt, mehrere Teilabschnitte 13, 14, 15 auf. An das Rahmenteil 59 schließt sich unten zunächst ein Klemmabschnitt 15 an, an dem in einem montierten Zustand der Fluidikeinheit 10 in der Aktoreinheit 60 eine zusätzliche Klemmung mittels eines noch später erläuterten Exzentermechanismus 70 der Aktoreinheit 60 bzw. des Gegen-Steckkupplungsteils 61 wirkt. Hierzu weist der Klemmabschnitt 15 mehrere Kugelkalotten 24 auf. Darüber befindet sich eine umlaufende Ringnut 14 für eine Dichtung 23, beispielsweise einen typischen O-Ring 23. Diese Dichtung 23 sorgt dafür, dass das Steckkupplungsteil 11 der Fluidikeinheit 10 und das Gegen-Steckkupplungsteil 61 der Aktoreinheit 60 im zusammenmontierten Zustand ringförmig gegeneinander abgedichtet sind. Oberhalb dieser Ringnut 14 befindet sich ein Bajonett-Kupplungsabschnitt 13 bzw. Verzahnungsabschnitt 13 oder Anschlussstutzen 13, an dem jeweils endseitig mehrere, sich radial nach außen erstreckende Vorsprünge 12 bzw. Zähne 12 angeordnet sind. Wie später noch erläutert, können damit passende Zähne 62 im Inneren des Gegen-Steckkupplungsteils 61 in Wechselwirkung treten, damit die Steckkupplungsteile 11, 61 erfindungsgemäß in sich verkoppelt werden können.

In den Figuren 5 und 6 ist weiter gut erkennbar, dass das Steckkupplungsteil 11 der Fluidikeinheit 10 in einem sich im zusammenmontierten Zustand im Rahmenteil 59 der Fluidikeinheit 10 befindlichen mittleren Bereich eine von der Düsenkammer 22 radial schräg nach oben, nach außen laufende seitliche Bohrung aufweist. Diese Bohrung dient der Zuführung des zu dosierenden Mediums in die Düsenkammer 22.

Außenseitig ist an diese Bohrung des Steckkupplungsteils 11 ein Zuführkanalabschnitt 54 angeschlossen, an dessen freien Ende wiederum die Reservoir-Schnittstelle 50 angeschlossen ist. In dieser befindet sich ein Kanal mit passenden Kanalabschnitten 52a, 52b, der von dem Zuführkanalabschnitt 54, welcher zur Düse 20 führt, bis zum Reservoiranschluss 51 verläuft. Da hier der Reservoiranschluss 51 nach oben gerichtet ist, sodass das Reservoir 101 parallel zu einer Längsrichtung des Gehäuseblocks 80 der Aktoreinheit 60 angeordnet werden kann und das Medium zu einem Teil auch durch Schwerkraft aus dem Reservoir 101 in Richtung der Düse 20 verläuft, sind die Kanalabschnitte 52a, 52b in der Reservoir-Schnittstelle 50 unter einem Winkel zueinander angeordnet, nämlich ein erster Kanalabschnitt 52a, welcher in der Verlängerung des Zuführkanalabschnitts 54 verläuft, und ein zweiter Kanalabschnitt 52b, welcher vom ersten Kanalabschnitt 52a aus im Wesentlichen senkrecht nach oben zu dem Reservoiranschluss 51 verläuft. Der Reservoiranschluss 51 weist außen ein Gewinde auf, um eine mit passendem Innengewinde ausgestattete Öffnung des Reservoirs 101 oder einen Zuleitungsanschluss (nicht dargestellt) aufschrauben zu können. Die dichte Fixierung des Zuführkanalabschnitts 54 am Steckkupplungsteil 11 sowie der Reservoir-Schnittstelle 50 am Zuführkanalabschnitt 54 erfolgt hier durch eine Klemmung mithilfe einer noch später erläuterten Klemmschraube 55.

Das Steckkupplungsteil 11 der Fluidikeinheit 10 mit der darin befindlichen Düsenkammer 22 sowie der Zuführkanalabschnitt 54 und die Reservoir-Schnittstelle 50 sind bevorzugt aus einem Material gefertigt, welches hochresistent gegen die verschiedensten zu dosierenden Medien ist, hier beispielsweise aus Edelstahl. Das Gleiche gilt für die Stößeldichtung 37, für den Stößel 30 selber sowie für den Düseneinsatz 18. Auch die Dichtungs-Stützscheibe 36 besteht aus einem geeigneten resistenten Material. Somit sind sämtliche Komponenten, die mit dem Medium in Berührung kommen, aus einem mediumresistenten Material gefertigt.

Um das Medium während der Dosierung auf einer gewünschten Temperatur zu halten, weist die Fluidikeinheit 10 wie erwähnt eine Heizeinrichtung 40 auf. Diese umfasst als ein wesentliches Element einen relativ massiven Heizblock 42, welcher so geformt ist, dass er wie eine Art Mantel den die Düsenkammer 22 enthaltenen Bereich des Steckkupplungsteils 11, den Zuführkanalabschnitt 54 und einen Teil der Reservoir-Schnittstelle 50 umgibt. Dieser Heizblock 42 ist aus einem besonders gut wärmeleitfähigen Material, beispielsweise Kupfer oder zumindest einem kupferhaltigen Metall. Im Heizblock 52 befindet sich zum einen zumindest ein Heizdraht (nicht dargestellt) und zum anderen zumindest ein Temperaturfühler (nicht dargestellt). Der Heizdraht ist mit einer Heizungssteuerleitung 47 im Heizungsanschlusskabel 46 verbunden, welche beispielsweise eine Verlängerung des Heizdrahts bilden kann, um Strom einer gewünschten Stärke durch den Heizdraht zu leiten und so den Heizblock 42 zu erwärmen. Der Temperaturfühler ist an eine Temperatur-Messleitung 48 im Heizungsanschlusskabel 46 angeschlossen, um die aktuelle Temperatur des Heizblocks 42 und somit des Mediums zu erfassen. Die Heizungssteuerleitung 47 und die Temperatur-Messleitung 48 werden über das Heizungsanschlusskabel 46 zu dem bereits oben erwähnten Heizungssteueranschluss 49 (auch Heizungsstecker 49 genannt) geführt, an dem die Heizungssteuerung angeschlossen werden kann. Im Heizungssteueranschluss 49 befindet sich hier vorzugsweise eine Speichereinheit 44, beispielsweise ein EEPROM 44, in der verschiedene Daten über die Fluidikeinheit 10 und insbesondere die Heizeinrichtung 40 (auch Heizmodul 40 genannt) enthalten und für die Heizungssteuerung auslesbar sind, beispielsweise eine Kennung der Fluidikeinheit 10 und oder der Heizeinrichtung 40, eine Artikelbezeichnung etc., um die Fluidikeinheit 10 und/oder das Heizmodul 40 zu identifizieren und z. B. eine Kontrolle zu ermöglichen, welches Heizmodul 40 an welchem Heizkreis angeschlossen ist. Weiterhin sind darin bevorzugt Regelparameter, beispielsweise PID-Regelparameter, für eine Regeleinheit in der Heizungssteuerung hinterlegt. Beim Anschluss der Heizungssteuerung an den Heizungssteueranschluss 49 können die Daten aus der Speichereinheit 44 automatisch von der Heizungssteuerung ausgelesen werden und stehen für die Regelung zur Verfügung.

Der Heizblock 42 ist hier auch gleichzeitig so geformt, dass er zur Fixierung der Reservoir-Schnittstelle 50 am Zuführkanalabschnitt 54 ineinander sowie zur Fixierung des Zuführkanalabschnitts 54 an dem Steckkupplungsteil 11 der Fluidikeinheit 10 genutzt werden kann. Hierzu findet sich in einem oberen Bereich des Heizblocks 42 eine in etwa quaderförmige Ausnehmung 45, in die zunächst der Zuführkanalabschnitt 54 hineingelegt und durch eine Bohrung im Heizblock 42, welche zur seitlichen, schräg radialen Öffnung im Steckkupplungsteil 11 zur Düsenkammer führt, hineingeschoben werden kann. Diese Öffnung im Steckkupplungsteil 11 ist von innen nach außen konisch bzw. kegelförmig zulaufend, sodass der Zuführkanalabschnitt 54 mit einer entsprechend geformten kegelförmigen Spitze dort hineingesteckt werden kann. An seinem hinteren zur Reservoir-Schnittstelle 50 weisenden Ende weist dieser Zuführkanalabschnitt 54 eine ebenfalls nach innen konisch bzw. kegelförmig zulaufende Öffnung auf, zur Aufnahme eines Dichtkegels 58 am Ende des in derselben Achsrichtung wie der Zuführkanalabschnitt 54 verlaufenden Kanalabschnitt 52a in der Reservoir-Schnittstelle 50. Die Reservoir-Schnittstelle 50 wird dazu ebenfalls in die Ausnehmung 45 des Heizblocks 42 eingelegt und dann von hinten mit dem Dichtkegel 58 in den Zuführkanalabschnitt 52 eingeschoben. In weiter verlaufender axialer Richtung des Zuführkanalabschnitts 54 und des dazu koaxial verlaufenden Kanalabschnitts 52a der Reservoir-Schnittstelle 50 ist dann am hinteren, vom Steckkupplungsteil 11 entfernten Ende des Kanalabschnitts 52a, die bereits erwähnte Klemmschraube 55 in einen Klemmschraubenabschnitt 41 des Heizblocks 42 einschraubbar. Die Schraubrichtung dieser Klemmschraube 55 verläuft ebenfalls koaxial zur Längsrichtung des Zuführkanalabschnitts 54 bzw. des entsprechenden Kanalabschnitts 52a in der Reservoir-Schnittstelle 50. Dieser koaxial zum Zuführkanalabschnitt 54 verlaufender Kanalabschnitt 52a der Reservoir-Schnittstelle 50 ist dabei ein durchgehender Kanal, der in Richtung der Klemmschraube 55 wieder offen ist und ebenfalls einen kegelförmigen nach innen schräg zu laufenden Abschnitt aufweist, in den eine Spitze 56 der Klemmschraube 55 hineindrücken kann. Wird die Klemmschraube 55 in den Klemmschraubenabschnitt 41 hineingeschraubt, so wird automatisch die Spitze 56 in das zur Klemmschraube 55 weisende Ende des Kanalabschnitts 52a der Reservoir-Schnittstelle 50 gedrückt und das vorderseitige Ende (der Dichtkegel 58) dieses Kanalabschnitts 52b wird wiederum in den zur Reservoir-Schnittstelle 50 weisenden Endabschnitt des Zuführkanalabschnitts 54 eingepresst, wodurch gleichzeitig die Spitze des Zuführkanalabschnitts 54 in die entsprechend konisch zulaufende Öffnung im Steckkupplungsteil 11 gepresst wird. Somit wird die gesamte Zuleitung beim Verklemmen automatisch jeweils durch die an den Enden der Kanalabschnitte gebildeten Dichtkegel gegeneinander abgedichtet. Um den hierzu nötigen Druck aufzubringen, weist die Klemmschraube 55 einen Schraubenkopf 57 auf, welcher außenseitig beispielsweise mit einer Rändelung oder mit Eingriffsmöglichkeiten für ein Werkzeug, z.B. einem Außen- und/oder Innen-Sechskant, ausgestattet ist.

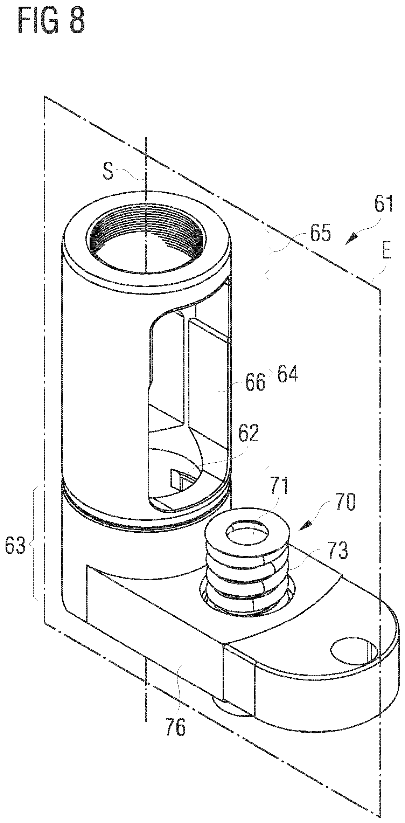

Zur Kopplung der Fludikeinheit 10 mit der Aktoreinheit 60 weist die Aktoreinheit 60 wie gesagt das Gegen-Steckkupplungsteil 61 auf, welches ebenfalls in den Schnittzeichnungen in den Figuren 5 und 6 gut erkennbar ist und welches zusätzlich noch in den Figuren 8 bis 10 perspektivisch und in verschiedenen Schnitten dargestellt ist.

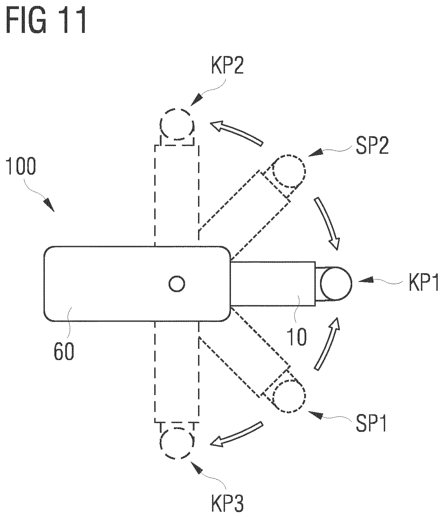

Dieses Gegen-Steckkupplungsteil 61 weist an seinem zum Steckkupplungsteil 11 der Fluidikeinheit 10 weisenden Ende einen Bajonett-Kupplungsabschnitt 63 bzw. Aufnahmeabschnitt 63 (auch kurz Aufnahme 63 genannt) auf, in welche der Bajonett-Kupplungsabschnitt 13 bzw. Verzahnungsabschnitt 13 des Steckkupplungsteils 11 der Fluidikeinheit 11 bis zu einem von der Innenwand des Steckkupplungsteils 11 nach innen ragenden ringförmigen Kragen 67 (bzw. Schulter, welche als Anschlag dient) einsteckbar ist. In einem Abstand unterhalb dieses Kragens 67 bzw. Schulter 67 , befinden sich an der Innenwandung dieser Aufnahme 63 des Gegen-Steckkupplungsteils 61 entsprechende Vorsprünge 62 bzw. Zähne 62, welche mit den Zähnen 12, die sich am Bajonett-Kupplungsabschnitt 13 des Steckkupplungsteils 11 der Fluidikeinheit 10 radial nach außen erstrecken, in Wechselwirkung treten können. Die Ausbildung und Anordnung der Zähne 12, 62 ist hierzu derart gewählt, dass in zumindest einer ersten Winkelstellung oder Drehstellung (bezogen auf eine Drehung um die Steckachse S) des Steckkupplungsteils 11 und des Gegen-Steckkupplungsteils 61 zueinander, die Zähne 12, 62 aneinander vorbeilaufen, wenn die Steckkupplungsteile 11, 61 ineinander gesteckt werden. Diese Drehstellung könnte als Steckposition SP1, SP2 bezeichnet werden (was später noch anhand der Figur 11 erläutert wird). Dann können die beiden Steckkupplungsteile 11, 61 um die Steckachse S gegeneinander verdreht werden, sodass die Zähne 12 des Steckkupplungsteils 11 der Fluidikeinheit 10 hinter die sich im Gegen-Steckkupplungsteil 61 nach innen erstreckenden Zähne 62 greifen und verhindern, dass das Steckkupplungsteil 11 wieder aus dem Gegen-Steckkupplungsteil 61 herausgezogen werden kann.

In Richtung der Steckachse S nach oben hin erstreckt sich ein weiterer Abschnitt des Gegen-Steckkupplungsteils 61, welcher hier als Eingriffsabschnitt 64 bezeichnet wird. Dieser weist an zwei sich radial gegenüberliegenden Seiten Aussparungen 66 auf, von denen eine wie später erläutert dazu dient, dass ein Hebel 93 des Bewegungsmechanismus 92 des Aktorsystems 90 mit dem Stößel 30 der anmontierten Fluidikeinheit 10 in Kontakt treten kann bzw. diesen betätigen kann.

An seinem oberen Ende weist das Gegen-Steckkupplungsteil 61 dann einen Fixierabschnitt 65 auf, welcher dazu dient, das komplette Gegen-Steckkupplungsteil 61 innerhalb des Gehäuseblocks 80 der Aktoreinheit 60 zu fixieren. Hierzu wird insbesondere auf Figur 6 verwiesen. Diese Fixierung erfolgt durch eine in Richtung der Steckachse S von oben durch den Gehäuseblock 80 verlaufende Stellschraube 85, welche an Ihrem oberen Ende einen Schraubenkopf 86 aufweist, der oben aus dem Gehäuseblock 80 herausragt und welcher mit einem unteren Steckkupplungsanschlusssabschnitt 87 in die Aktionskammer 82 hineinragt.

Wie bereits erwähnt, weist der Gehäuseblock 80 verschiedene nebeneinander liegende Kammern auf, nämlich zum einem eine nach unten, zur Fluidikeinheit 10 hin offene Aktionskammer 82, in welcher das Gegen-Steckkupplungsteil 61 eingeschoben und dort fixiert wird, und zum anderen eine im Wesentlichen parallel daneben liegende, nach oben offene aber dort verschließbare Aktorkammer 81, in welcher im Wesentlichen das Aktorsystem 90 mit seinem Aktor 91, hier dem Piezostack 91, und einem Bewegungsmechanismus 92 mit einem noch später erläuterten Hebel 93 angeordnet ist. Über einen Durchbruch 83 kann der Hebel 93 von der Aktorkammer 81 in die Aktionskammer 82 hineinragen und dort mit dem Stößel 30 einer in der Aktoreinheit 60 angeschlossenen Fluidikeinheit 10 in Wechselwirkung treten (siehe Figur 5).

Die Stellschraube 85 wird hierzu von oben durch eine entsprechende Bohrung im Gehäuseblock 80 hineingesteckt und an dem in die Aktionskammer 82 hineinragenden Stecckupplungsanschlussabschnitt 87 wird ein Gewindestück 88 aufgeschoben, welches endseitig mit einer Mutter 89, welche auf ein Gewinde am Steckkupplungsanschlussabschnitt 87 geschraubt wird, an der Stellschraube 85 drehfest fixiert wird. D. h. dieses Gewindestück 88 ist dabei mit der Stellschraube 85 so in Eingriff, dass bei einem Verdrehen der Stellschraube 85, beispielsweise von außen mittels des Schraubenkopfs 86, das Gewindestück 88 mitgedreht wird. Dieses Gewindestück 88 weist ein Außengewinde auf, welches in ein Innengewinde 69 im Fixierabschnitt 65 des Gegen-Steckkupplungsteils 61 eingreift. Hierdurch kann mit Hilfe der Stellschraube 85 die Lage des Gegen-Steckkupplungsteils 61 innerhalb des Gehäuseblocks 80 der Aktoreinheit 60 genau eingestellt werden. Somit kann eine Justage der "Höheneinstellung" des in der Fluidikeinheit 10 gelagerten Stößels 30 (welcher sich durch die bajonettverschlussartige Verzahnung der Steckkupplungsteile 11, 61 immer in einer genau definierten Position innerhalb des Gegen-Steckkupplungsteils 61 befinden sollte) relativ zum Gehäuseblock 80 und somit auch relativ zu der Bewegungsmechanik 92 des Aktorsystems 90 bzw. zu einer Kontaktstelle 97 am Hebel 93 erfolgen. D. h. es kann genau eingestellt werden, wie weit der Stößel 30 in einer definierten Ausgangsstellung des Aktorsystems 90 über den Bewegungsmechanismus 92, nämlich den Hebel 93, entgegen der Feder 34 in Richtung des Dichtsitzes 19 der Düse 20 gedrückt wird. Durch zwei Zylinderstifte 61Z im Gehäuseblock 80 der Aktoreinheit 60 wird nach unten hin ein Anschlag für die Höhenverstellung des Gegensteckkupplungsteiles 61 erreicht.

In der Aktorkammer 81 befindet sich hier, wie erwähnt, ein Piezostack 91, welcher sich in Längsrichtung der Aktorkammer 81 entsprechend einer Beschaltung mittels einer Steuereinrichtung ausdehnt und wieder zusammenziehen kann. Dieser Piezostack 91 kann von oben in die Aktorkammer 81 eingelegt werden. Als oberes Widerlager dient anschließend eine durch eine Schraubbewegung höhenverstellbare Kugelkalotte 91K. Diese wird in ein Gewinde der Aktorkammer 81 eingeschraubt und ermöglicht so die genaue Justage des Aktorsystems 90 und hier insbesondere des Piezostacks 91 zum Hebel 93. Das Gewinde ist dabei so ausgelegt und dimensioniert, dass die notwendigen Vorspannkräfte und betriebsbedingten Kraftspitzen aufgenommen werden können und gleichzeitig eine sehr präzise Positionseinstellung bei der Montage gewährleistet wird. Zur vibrationsfesten Sicherung der Kugelkalotte 91K wird diese mit einem Deckel 99 über vier Senkkopfschrauben verschraubt und so gegen ein betriebsbedingtes Verdrehen gesichert. Diese Kugelkalotte 91K drückt von oben gegen ein oberes, an die Kugelkalotte 91K angepasstes Druckstück des Piezostacks 91. Durch die Lage der Kugelkalotte 91K relativ zum Deckel 99 kann die Position des oberen Lagers des Piezostacks 91 genau definiert bzw. eine Vorspannung auf den Piezostack 91 aufgegeben werden. Nach unten ist der Piezostack 91 über ein unten spitzwinkelig zulaufendes Druckstück auf einem Hebel 93 gelagert, welcher wiederum auf einem Hebellager 94 am unteren Ende der Aktorkammer 81 aufliegt. Über dieses Hebellager 94 ist der Hebel 93 um eine Kippachse K verkippbar, sodass ein Hebelarm des Hebels 93 durch den Durchbruch 83 in die Aktionskammer 82 hineinragt und dort durch die Aussparung 66 in den Eingriffsabschnitt 64 des Gegen-Steckkupplungsteils 61 hineinragt. Am Ende des Hebelarms weist dieser eine in Richtung zum Stößel 30 einer in der Aktoreinheit 60 gekoppelten Fluidikeinheit 10 weisende Kontaktfläche 97 auf, welche auf die Kontaktfläche 33 des Stößelkopfs 32 drückt.

Es sei an dieser Stelle erwähnt, dass bei dem dargestellten Ausführungsbeispiel vorgesehen ist, dass diese Kontaktfläche 97 des Hebels 93 (bei montierter Fluidikeinheit 10) permanent in Kontakt mit der Kontaktfläche 33 des Stößelkopfs 32 ist, in dem die Feder 34 den Stößelkopf 32 von unten gegen den Hebel 93 drückt. Grundsätzlich wäre es aber auch möglich, dass in einer Ausgangs- bzw. Ruhelage der Feder 34 ein Abstand zwischen Stößel 30 und Hebel 93 vorhanden ist, sodass der Hebel 93 zunächst bei einem Herunterschwenken frei einen bestimmten Wegabschnitt durchfährt und dabei Geschwindigkeit aufnimmt und dann mit einem hohem Impuls auf den Stößel 30 bzw. dessen Kontaktfläche 33 aufschlägt, um den Ausstoßimpuls zu erhöhen, den der Stößel 30 wiederum auf das Medium ausführt.

Um eine nahezu konstante Vorspannung des Hebel-Piezo-Antriebssystems des Aktorsystems 90, unabhängig von der jeweils benötigten Einstellung über den Fixierabschnitt 65, zu ermöglichen, wird der Hebel 93, an dem Ende, an dem er mit dem Stößel 30 in Kontakt kommt, durch eine Aktorfeder 79, nach oben gedrückt, die in einem eigenen Führungszylinder 98 gelagert ist. Durch diese Lagerung führt eine bedienerseitige Änderung der Lage der Fluidikeinheit 10 im gekoppelten Zustand über die Stellschraube 85 nicht zu einer Längenänderung der Aktorfeder 79 und damit zu einer stark geänderten Vorspannkraft des piezoelektrischen Antriebes. Der Führungszylinder 98 wird durch zwei Zylinderstifte 98Z in seiner Position im Gehäuseblock 80 der Aktoreinheit 60 fixiert, sodass er ein ortsfestes Lager für die Aktorfeder 79 bietet. Dieser Führungszylinder 98 weist an seiner unteren Stirnseite, in etwa der Höhe der Zähne 62 des Gegen-Steckkupplungsteils 61, eine Durchgangsbohrung auf, welche an den Durchmesser eines entsprechenden Abschnitt des Stößellagers 35 angepasst ist, welches im Steckkupplungsteil 11 der Fluidikeinheit 10 von oben eingeschraubt ist. Bei zusammengekoppelter Fluidikeinheit 10 und Aktoreinheit 60 befindet sich der Verzahnungsabschnitt 13 bzw. Bajonettkupplungsabschnitt 13 des Steckkupplungsteils 11 der Fluidikeinheit 10 somit in einem koaxial zur Steckachse S angeordneten Ringspalt zwischen dem Verzahnungsabschnitt 63 bzw. Bajonettkupplungsabschnitt 63 des Gegen-Steckkupplungsteils 61 und einer Außenwand dieses Führungszylinders 98.

Zur zusätzlichen manuellen Sicherung der Fluidikeinheit 10 an der Aktoreinheit 60 und insbesondere, damit das Steckkupplungsteil 11 und Gegen-Steckkopplungsteil 61 im montierten Zustand spielfrei ineinander gekoppelt sind, weist das Gegen-Steckkupplungsteil 61 hier einen bereits erwähnten Exzentermechanismus 70 auf.

Hierzu erstreckt sich an einer Seite des Steckkupplungsteils 61 nach außen radial vom Bajonettkupplungsabschnitt 63 weg eine Exzenter-Halterung 76. Diese kann in einem Stück mit dem Gegen-Steckkupplungsteil 61 geformt sein. Wenn das Gegen-Steckkopplungsteil 61 aber als Drehteil hergestellt ist, ist vorteilhafterweise diese Exzenter-Halterung 76 seitlich an die Außenwand des Gegen-Steckkupplungsteils 61 angeflanscht, beispielsweise mit entsprechenden Schrauben, Kopplungsstiften oder dergleichen. In dem dargestellten Ausführungsbeispiel erstreckt sich diese Exzenter-Halterung 76 radial nach außen an einer Unterseite des Gehäuseblocks 80 der Aktoreinheit 60 entlang, welche in einem unteren Bereich entsprechende Bohrungen und Ausnehmungen aufweist, sodass dort diese Exzenter-Halterung 76 und die weiteren Teile des Exzentermechanismus 70 untergebracht werden können.

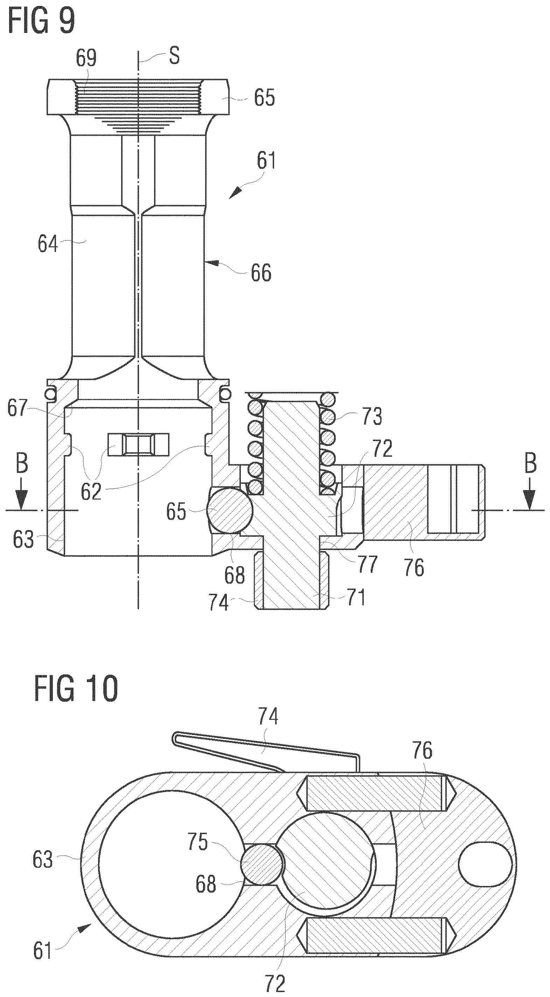

In dieser Exzenter-Halterung 76 befindet sich eine parallel zur Steckachse S verlaufende Durchgangsbohrung 77, in welche eine Exzenter-Welle 71 eingesetzt ist, die sowohl nach unten und nach oben über die Exzenter-Halterung 76 hinausragt. In einem oberen Abschnitt befindet sich auf der Exzenter-Welle 71 eine Feder 73, durch welche die Exzenter-Welle 71 (bei einem im Gehäuseblock 80 der Aktoreinheit 60 eingesetzten Gegen-Steckkupplungsteil 61) vom Gehäuseblock 80 weggedrückt wird und mit einer unteren Schulter eines Exzenter-Abschnitts 72 der Exzenter-Welle 71 gegen einen passenden Kragen der Durchgangsbohrung 77 in der Exzenter-Halterung 76 gedrückt wird. Durch diese Feder 73 wird auch dafür gesorgt, dass das Gegen-Steckkupplungsteil 61 im Gewinde des Gewindestücks 88 der Stellschraube 85 nach unten gedrückt wird und somit spielfrei in der Aktoreinheit 60 positioniert ist. Von diesem Exzenter-Abschnitt 72 erstreckt sich ein weiterer Abschnitt 78 nach unten aus der Exzenter-Halterung 76 heraus, der mit einem Exzenter-Hebel 74 gekoppelt ist, der von einem Bediener bedient werden kann, um die Exzenter-Welle 71 um ihre Längsachse zu verdrehen, der in Höhe des Exzenter-Abschnitts 72, welcher, wie in Figur 10 gut zu erkennen ist, in einer senkrecht zur Längsachse der Exzenter-Welle 71 verlaufenden Ebene exzentrisch geformt ist. In eine Durchgangsbohrung 68 oder dergleichen zwischen der Bohrung 77 für die Exzenter-Welle 71 und dem inneren Bereich des Bajonettkupplungsabschnitts 63 des Gegen-Steckkupplungsteils 61 ist hier eine Presskugel 75 eingelegt, auf welche dieser Exzenter-Abschnitt 72 wirkt. Ist nun ein Steckkupplungsteil 11 einer Fluidikeinheit 10 in das Gegen-Steckkupplungsteil 61 von unten eingesteckt worden und befindet es sich in der gewünschten Kopplungsposition, in der die Zähne des bajonettartigen Kopplungsmechanismus gegeneinander verzahnt sind, kann der Bediener durch ein einfaches Verkippen des Exzenter-Hebels 74 die Exzenter-Welle 71 um ihre eigene Achse verdrehen und somit auch den Exzenter-Abschnitt 72 so verdrehen, dass die Presskugel 75 mit relativ hohem Druck aus der Durchgangsbohrung 68 hinaus gegen die Außenwand des Steckkupplungsteils 11, nämlich im Bereich des Klemmabschnitts 15 in eine der Kugelkalotten 24 (siehe Figur 7), gedrückt wird. Somit wird das gesamte Steckkupplungsteil 11 immer gegen die der Presskugel 75 gegenüberliegende Innenwand des Gegen-Steckkupplungsteils 61 gepresst, wodurch nach Anziehen des Exzenter-Hebels 74 eine exakt definierte Lage von Steckkupplungsteil 61 der Fluidikeinheit 10 zum Gegen-Steckkuppplungsteil 61 der Aktoreinheit 60 sichergestellt ist. Die Durchgangsbohrung 68 ist dabei bevorzugt so ausgebildet, das die Presskugel 75 nicht vollständig in den Innenraum des Aufnahmeabschnitts 63 des Gegen-Steckkupplungsteils 61 gelangen kann.

Bei einem (nicht dargestellten) anderen, beispielsweise alternativ zum Exzentermechanismus nutzbaren, Mechanismus wird die Presskugel 75 anstelle durch den Exzenter-Abschnitt 72 durch eine Druckfeder ein Stück aus der Durchgangsbohrung 98 in den Innenraum des Aufnahmeabschnitts 63 des Gegen-Steckkupplungsteils 61 herausgedrückt. Dieser Mechanismus wirkt dann also als Rastmechanismus. Beim Einstecken der Stecckupplungsteils 11 in das Gegen-Steckkupplungsteil 61 wird die Presskugel 75 entgegen der Federkraft in die Durchgangsbohrung 98 zurückgedrückt, bis sie in eine der Kugelkalotten 24 in der Außenwand des Steckkupplungsteils 11 einrastet.

Wie an dem vorgeschriebenen Ausführungsbeispiel deutlich wird, bietet die Erfindung den großen Vorteil, dass eine Kopplung einer Fluidikeinheit 10 an einer Aktoreinheit 60 eines erfindungsgemäßen Dosiersystems 100 von verschiedenen Seiten aus möglich ist.

Dies wird noch einmal anhand von Figur 11 erläutert, welche grob schematisch von oben eine Aktoreinheit 60 und eine Fluidikeinheit 10 in verschiedenen möglichen Positionen zueinander um die Steckachse S verdreht darstellt. Beispielsweise könnte ein Einstecken des Steckkupplungsteils 11 der Fluidikeinheit 10 in das Gegen-Steckkupplungsteil 61 der Aktoreinheit 60 entlang der Steckachse S wahlweise in zumindest zwei verschiedenen Steckpositionen SP1, SP2 erfolgen. Durch ein einfaches Verschwenken der Fluidikeinheit 10 zur Aktoreinheit 60, um beispielsweise 45 Grad um die Steckachse S, kann dann die Fluidikeinheit 10 zur Aktoreinheit 60 in eine Kopplungsposition KP1, KP2, KP3 gebracht werden, in der die Verzahnung hintereinander eingerastet ist und das Steckkupplungsteil 11 der Fluidikeinheit 10 nicht mehr aus dem Gegen-Steckkupplungsteil 61 der Aktoreinheit 60 herausgezogen werden kann. In der Figur 11 sind dabei drei mögliche Kopplungspositionen KP1, KP2, KP3 gezeigt, bei denen sich die Fluidikeinheit 10 jeweils an drei verschiedenen zueinander um jeweils 90 Grad versetzten Drehpositionen befindet. Durch den Exzentermechanismus 70 oder einen anderen Mechanismus, beispielsweise den beschriebenen Rastmechanismus, kann dann, wenn gewünscht, eine zusätzliche Sicherung erreicht werden.

Die Erfindung erlaubt also auch unter sehr beengten Bedingungen innerhalb einer Dosieranlage eine besonders bequeme und schnelle Kopplung von Fluidikeinheit 10 und Aktoreinheit 60. Es wird abschließend noch einmal darauf hingewiesen, dass es sich bei den vorhergehend detailliert beschriebenen Komponenten des Dosiersystems lediglich um Ausführungsbeispiele handelt, welche vom Fachmann in verschiedenster Weise modifiziert und deren Merkmale neu kombiniert werden können, ohne den Bereich der Erfindung zu verlassen. Beispielsweise wäre es auch möglich, die Fluidikeinheit nur mit Hilfe der Verzahnung mit der Aktoreinheit zu verkoppeln oder eine Fixierung nur mit Hilfe des Exzentermechanismus zu erreichen. Ebenso könnte, wie oben bereits erwähnt, zusätzlich oder alternativ zu der Heizeinrichtung der Fluidikeinheit, die Aktoreinheit eine Heizeinrichtung aufweisen. Diese könnte sich zum Beispiel in und/oder an dessen Steckkupplungsteil befindet. Es kann dann auf die Heizeinrichtung der Fluidikeinheit verzichtet werden, und anstelle des Heizblocks kann ein Materialblock aus einem hitzeresistenten Kunststoff (z.B. PEEK) verwendet werden. Im Übrigen kann eine dieser Materialblock aber mechanisch die gleichen Funktionen ausüben, wie der oben beschriebene Heizblock 42, d.h. er kann insbesondere dazu dienen, dass in der beschriebenen Weise die Zuführkanalabschnitte 53, 54 und/oder der Düsenabschnitt 16 ineinander gepresst werden, um eine durchgehende dichte Zuleitung für den Dosierstoff zur Düse zu bilden. Des Weiteren ist die Erfindung auch bei anderen Dosierverfahren, d.h. nicht nur in der Mikrodosiertechnik, einsetzbar, auch wenn sie in diesem Bereich wegen der dort auftretenden speziellen Probleme besonders wertvoll ist. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

### Bezugszeichenliste:

10 Fluidikeinheit
11 (erstes) Steckkupplungsteil
12 Vorsprung / Zahn
13 Bajonett-Kupplungsabschnitt / Verzahnungsabschnitt / Anschlussstutzen
14 Ringnut
15 Klemmabschnitt
16 Düsenabschnitt
17 Gewinde
18 Düseneinsatz
19 Dichtsitz
20 Düse
21 Düsenöffnung / Düsenbohrung
22 Düsenkammer
23 Dichtung / O-Ring
24 Kugelkalotte
30 bewegliches Element/ Ausstoßelement / Stößel
31 Stößelspitze
32 Stößelkopf
33 Kontaktfläche
34 Feder
35 Stößellagerteil
36 Dichtungs-Stützscheibe
37 Stößeldichtung
40 Heizeinrichtung / Heizmodul
41 Klemmschraubenabschnitt
42 Heizblock
43 Düsenmantelabschnitt
44 Speichereinheit / EEPROM
45 Ausnehmung
46 Heizungsanschlusskabel
47 Heizungssteuerleitung
48 Temperatur-Messleitung
49 Heizungssteueranschluss / Heizungsstecker
50 Reservoir-Schnittstelle
51 Reservoiranschluss
52a, 52b Kanalabschnitte
54 Zuführkanalabschnitt
55 Klemmschraube
56 Spitze
57 Schraubenkopf
58 Dichtkegel
59 Rahmenteil
60 Aktoreinheit
61 (zweites) Steckkupplungsteil / Gegen-Steckkupplungsteil
61Z Zylinderstifte
62 Vorsprung / Zahn
63 Bajonett-Kupplungsabschnitt / Aufnahmeabschnitt /Aufnahme
64 Eingriffsabschnitt
65 Fixierabschnitt
66 Aussparungen
67 Kragen / Schulter
68 Durchgangsbohrung
69 Innengewinde
70 Exzentermechanismus
71 Exzenter-Welle
72 Exzenter-Abschnitt
73 Feder
74 Exzenter-Hebel
75 Presskugel
76 Exzenter-Halterung
77 Durchgangsbohrung
78 Abschnitt
79 Aktorfeder
80 Gehäuseblock
81 Aktorkammer
82 Aktionskammer
83 Durchbruch
85 Stellschraube
86 Schraubenkopf
87 Steckkupplungsanschlusssabschnitt
88 Gewindestück
89 Mutter
90 Aktorsystem
91 Aktor / Piezoelement-Stapel / Piezostack
91K Piezoverkapselung
92 Bewegungsmechanismus
93 Hebel
94 Hebellager
95 Steuerkabel
96 Aktorsystemsteueranschlüsse
97 Kontaktfläche
98 Führungszylinder
98Z Zylinderstifte
99 Deckel
100 Dosiersystem
101 Reservoir / Medium-Kartusche
102 Reservoirdruckanschluss
103 Halterung
K Kippachse
KP1, KP2, KP3 Kopplungsposition
R Ausstoßrichtung
S Steckachse
SP1, SP2 Steckposition

## Patentansprüche

1. Dosiersystem (100) mit einer Aktoreinheit (60) und einer damit lösbar koppelbaren Fluidikeinheit (10), wobei die Fluidikeinheit (10) eine Düse (20) sowie ein beweglich gelagertes Element (30) und die Aktoreinheit (60) ein Aktorsystem (90) aufweist, um das bewegliche Element (30) der Fluidikeinheit (10) zu betätigen, wobei die Fluidikeinheit (10) ein erstes Steckkupplungsteil (11) und die Aktoreinheit (60) ein zweites Steckkupplungsteil (61) aufweisen, die zur Kopplung der Fluidikeinheit (10) an die Aktoreinheit (60) entlang einer Steckachse (S) ineinandersteckbar und in sich miteinander koppelbar sind, **dadurch gekennzeichnet, dass** das erste Steckkupplungsteil (11) und das zweite Steckkupplungsteil (61) zusammenwirkende Vorsprünge (12, 62) und/oder Ausnehmungen aufweisen.

2. Dosiersystem gemäß Anspruch 1, wobei die Aktoreinheit (60) und die Fluidikeinheit (10) derart ausgebildet sind, dass die Fluidikeinheit (10) unter zumindest zwei verschiedenen Drehstellungen (KP1, KP2, KP3) um die Steckachse (S) an die Aktoreinheit (60) ankoppelbar ist.

3. Dosiersystem gemäß einem der vorstehenden Ansprüche mit einem Mechanismus (71), vorzugsweise einem Exzentermechanismus (71), welcher ausgebildet ist, um das erste Steckkupplungsteil (11) und das zweite Steckkupplungsteil (61) in einer ineinandergesteckten Position, vorzugsweise radial zur Steckachse (S), gegeneinander zu drücken.

4. Dosiersystem gemäß Anspruch 3, wobei der Mechanismus (71), insbesondere der Exzentermechanismus (71), auf ein innenliegendes Steckkupplungsteil (11) der zwei Stecckupplungsteile (11, 61) wirkt und dieses gegen eine Innenwand eines außenliegenden Steckkupplungsteils (61) der zwei Steckkupplungsteile (11, 61) drückt.

5. Dosiersystem gemäß Anspruch 3 oder 4, wobei der Mechanismus (71), insbesondere der Exzentermechanismus (71), vorzugsweise über ein Anpresselement (75), auf zumindest eines der zwei Steckkupplungsteile (11, 61) wirkt.

6. Dosiersystem gemäß einem der vorstehenden Ansprüche, wobei die Fluidikeinheit (10) als erstes Steckkupplungsteil (11) einen Anschlussstutzen (13) aufweist und die Aktoreinheit (60) als zweites Steckkupplungsteil (61) eine Aufnahme (63) für den Anschlussstutzen (11) der Fluidikeinheit (10) aufweist.

7. Dosiersystem gemäß einem der vorstehenden Ansprüche,
wobei die Fluidikeinheit (10) eine Heizeinrichtung (40) aufweist, vorzugsweise mit einem einen Zuführkanalabschnitt (53, 54) und/oder zumindest einen Düsenabschnitt (16) umgebenden Heizblock (42)
und/oder
wobei
die Aktoreinheit (60), vorzugsweise das zweite Steckkupplungsteil (61), eine Heizeinrichtung aufweist, welche vorzugsweise - bei einer an die Aktoreinheit (60) gekoppelten Fluidikeinheit (10) - Wärme an einen Zuführkanalabschnitt (53, 54) und/oder Düsenabschnitt (16) der Fluidikeinheit (10) abgibt.

8. Dosiersystem gemäß Anspruch 7, wobei der Zuführkanalabschnitt (53, 54) und/oder zumindest der Düsenabschnitt (16) lösbar in einem Materialblock, vorzugsweise im Heizblock (42) fixiert sind.

9. Dosiersystem gemäß Anspruch 8,
wobei der Zuführkanalabschnitt (53, 54) und/oder der Düsenabschnitt (16) im Materialblock, vorzugsweise Heizblock (42) mittels einer Klemmschraube (55) fixiert sind,
und/oder
wobei benachbarte Zuführkanalabschnitte (53, 54) und/oder der Düsenabschnitt (16) durch Dichtkegel (58, 59) zur Bildung einer durchgehenden Zuleitung endseitig ineinander gepresst werden

10. Dosiersystem gemäß einem der vorstehenden Ansprüche, wobei die Aktoreinheit (60) und/oder die Fluidikeinheit (10) eine Heizeinrichtung (40) und einen Heizungssteueranschluss (49) zur Verbindung mit einer Heizungssteuerung sowie eine Speichereinheit (44) umfassen, in welcher der Aktoreinheit (60) und/oder der Fluidikeinheit (10), insbesondere der Heizeinrichtung (40), zugeordnete Daten für die Heizungssteuerung gespeichert sind, besonders bevorzugt Regelparameter zur Regelung der Heizeinrichtung (40) durch die Heizungssteuerung.

11. Dosiersystem gemäß einem der vorstehenden Ansprüche,
wobei das zweite Steckkupplungsteil (61) entlang der Steckachse (S) relativ zu weiteren Bauteilen der Aktoreinheit (60) verstellbar ist
und/oder
wobei das erste Steckkupplungsteil (11) entlang der Steckachse (S) relativ zu weiteren Bauteilen der Fluidikeinheit (10) verstellbar ist.

12. Dosiersystem gemäß einem der vorstehenden Ansprüche, wobei das erste und/oder das zweite Steckkupplungsteil (11, 61) als Drehteile hergestellt sind.

13. Fluidikeinheit (10) für ein Dosiersystem (100) gemäß einem der vorstehenden Ansprüche, wobei die Fluidikeinheit (10) eine Düse (20), ein beweglich gelagerten Element (30) und ein erstes Steckkupplungsteil (11) aufweist, welches entlang einer Steckachse (S) in oder über ein zweites Steckkupplungsteil (61) einer Aktoreinheit (60) des Dosiersystems (100) steckbar und mit diesem in sich kuppelbar ist, um die Fluidikeinheit (10) lösbar mit der Aktoreinheit (60) zu koppeln, welche ein Aktorsystem (90) aufweist, um das bewegliche Element der Fluidikeinheit (10) zu betätigen, **dadurch gekennzeichnet, dass** das erste Steckkupplungsteil (11) und das zweite Steckkupplungsteil (61) zusammenwirkende Vorsprünge (12, 62) und/oder Ausnehmungen aufweisen.

14. Aktoreinheit (60) für ein Dosiersystem (100) gemäß einem der vorstehenden Ansprüche 1 bis 12, wobei die Aktoreinheit (60) ein zweites Steckkupplungsteil (61) aufweist, welches entlang einer Steckachse (S) in oder über ein erstes Steckkupplungsteil (11) einer Fluidikeinheit (10) des Dosiersystems (100) steckbar und mit diesem in sich kuppelbar ist, um die Fluidikeinheit (10), welche eine Düse (20) und ein beweglich gelagertes Element (30) aufweist, lösbar mit der Aktoreinheit (60) zu koppeln, so dass ein Aktorsystem (90) der Aktoreinheit (60) das beweglich gelagerte Element (30) der Fluidikeinheit (10) betätigen kann, **dadurch gekennzeichnet, dass** das erste Steckkupplungsteil (11) und das zweite Steckkupplungsteil (61) zusammenwirkende Vorsprünge (12, 62) und/oder Ausnehmungen aufweisen.

15. Verfahren zur lösbaren Kopplung einer Fluidikeinheit (10) mit einer Aktoreinheit (60) eines Dosiersystems (100), wobei die Fluidikeinheit (10) eine Düse (20) sowie ein beweglich gelagertes Element (30) und die Aktoreinheit (60) ein Aktorsystem (90) aufweist, um das bewegliche Element (30) der Fluidikeinheit (10) zu betätigen, wobei Steckkupplungsteile (11, 61) der Fluidikeinheit (10) und der Aktoreinheit (60) entlang einer Steckachse (S) ineinandergesteckt und in sich miteinander gekoppelt werden, wobei ein erstes Stecckupplungsteil (11) und ein zweites Steckkupplungsteil (61) zusammenwirkende Vorsprünge (12, 62) und/oder Ausnehmungen aufweisen.

## Claims

1. A dosing system (100) with an actuator unit (60) and a fluidic unit (10) which can be coupled thereto in a detachable manner, wherein the fluidic unit (10) has a nozzle (20) and an element (30), mounted in a movable manner, and the actuator unit (60) has an actuator system (90), in order to actuate the movable element (30) of the fluidic unit (10), wherein the fluidic unit (10) has a first plug coupling part (11) and the actuator unit (60) has a second plug coupling part (61), which can be plugged into one another for coupling the fluidic unit (10) to the actuator unit (60) along a plugging axis (S) and can be coupled to one another integrally, **characterised in that** the first plug coupling part (11) and the second plug coupling part (61) have interacting projections (12, 62) and/or recesses.

2. The dosing system according to Claim 1, wherein the actuator unit (60) and the fluidic unit (10) are constructed in such a manner that the fluidic unit (10) can be coupled to the actuator unit (60) under at least two different rotational positions (KP1, KP2, KP3) around the plugging axis (S).

3. The dosing system according to one of the preceding claims, having a mechanism (71), preferably an eccentric mechanism (71), which is constructed in order to press the first plug coupling part (11) and the second plug coupling part (61) against one another in a mutually plugged position, preferably radially to the plugging axis (S).

4. The dosing system according to Claim 3, wherein the mechanism (71), particularly the eccentric mechanism (71), acts on an internal plug coupling part (11) of the two plug coupling parts (11, 61) and presses the same against an inner wall of an outer plug coupling part (61) of the two plug coupling parts (11, 61).

5. The dosing system according to Claim 3 or 4, wherein the mechanism (71), particularly the eccentric mechanism (71), acts on at least one of the two plug coupling parts (11, 61), preferably by means of a pressure element (75).

6. The dosing system according to one of the preceding claims, wherein the fluidic unit (10) has a connecting piece (13) as first plug coupling part (11) and the actuator unit (60) has a mount (63) for the connecting piece (11) of the fluidic unit (10) as second plug coupling part (61).

7. The dosing system according to one of the preceding claims,
wherein the fluidic unit (10) has a heating device (40), preferably with a heating block (42) surrounding a supply channel section (53, 54) and/or at least one nozzle section (16)
and/or
wherein
the actuator unit (60), preferably the second plug coupling part (61), has a heating device, which preferably outputs heat to a supply channel section (53, 54) and/or nozzle section (16) of the fluidic unit (10) - in the case of a fluidic unit (10) coupled to the actuator unit (60).

8. The dosing system according to Claim 7, wherein the supply channel section (53, 54) and/or at least the nozzle section (16) are fixed in a material block, preferably in the heating block (42), in a detachable manner.

9. The dosing system according to Claim 8,
wherein the supply channel section (53, 54) and/or the nozzle section (16) are fixed in the material block, preferably heating block (42), by means of a clamping screw (55),
and/or
wherein adjacent supply channel sections (53, 54) and/or the nozzle section (16) are pressed into one another at the ends by means of conical nipples (58, 59) to form a continuous supply line.

10. A dosing system according to one of the preceding claims, wherein the actuator unit (60) and/or the fluidic unit (10) comprise a heating device (40) and a heating control connection (49) for connection to a heating control and a memory unit (44), in which data for the heating control assigned to the actuator unit (60) and/or the fluidic unit (10), particularly the heating device (40), are stored, particularly preferably control parameters for controlling the heating device (40) by means of the heating control.

11. The dosing system according to one of the preceding claims,
wherein the second plug coupling part (61) can be adjusted along the plugging axis (S) relatively to further components of the actuator unit (60)
and/or
wherein the first plug coupling part (11) can be adjusted along the plugging axis (S) relatively to further components of the fluidic unit (10).

12. The dosing system according to one of the preceding claims, wherein the first and/or the second plug coupling part (11, 61) are produced as turned parts.

13. A fluidic unit (10) for a dosing system (100) according to one of the preceding claims, wherein the fluidic unit (10) has a nozzle (20), an element (30) mounted in a movable manner and a first plug coupling part (11), which can be plugged along a plugging axis (S) into or over a second plug coupling part (61) of an actuator unit (60) of the dosing system (100) and can be coupled integrally to the same, in order to couple the fluidic unit (10) to the actuator unit (60), which has an actuator system (90), in a detachable manner, in order to actuate the movable element of the fluidic unit (10), **characterised in that** the first plug coupling part (11) and the second plug coupling part (61) have interacting projections (12, 62) and/or recesses.

14. An actuator unit (60) for a dosing system (100) according to one of the preceding Claims 1 to 12, wherein the actuator unit (60) has a second plug coupling part (61), which can be plugged along a plugging axis (S) into or over a first plug coupling part (11) of a fluidic unit (10) of the dosing system (100) and can be coupled integrally to the same, in order to couple the fluidic unit (10), which has a nozzle (20) and an element (30) mounted in a movable manner, to the actuator unit (60) in a detachable manner, so that an actuator system (90) of the actuator unit (60) can actuate the element (30), mounted in a movable manner, of the fluidic unit (10), **characterised in that** the first plug coupling part (11) and the second plug coupling part (61) have interacting projections (12, 62) and/or recesses.

15. A method for the detachable coupling of a fluidic unit (10) to an actuator unit (60) of a dosing system (100), wherein the fluidic unit (10) has a nozzle (20) and an element (30), mounted in a movable manner, and the actuator unit (60) has an actuator system (90), in order to actuate the movable element (30) of the fluidic unit (10), wherein plug coupling parts (11, 61) of the fluidic unit (10) and the actuator unit (60) are plugged into one another along a plugging axis (S) and are coupled to one another integrally, wherein a first plug coupling part (11) and a second plug coupling part (61) have interacting projections (12, 62) and/or recesses.

## Revendications

1. Système de dosage (100) avec une unité d'actionneurs (60) et une unité fluidique (10) pouvant être couplée de manière amovible avec celle-ci, l'unité fluidique (10) présentant une buse (20), ainsi qu'un élément (30) logé de manière mobile et l'unité d'actionneurs (60) présentant un système d'actionneurs (90), pour actionner l'élément (30) logé de manière mobile de l'unité fluidique (10), l'unité fluidique (10) présentant une première pièce d'accouplement enfichable (11) et l'unité d'actionneurs (60) présentant une deuxième pièce d'accouplement enfichable (61), qui pour coupler l'unité fluidique (10) avec l'unité d'actionneur (60), peuvent être enfichées l'une dans l'autre le long d'un axe d'enfichage (S), et qui peuvent être couplées en soi l'une avec l'autre, **caractérisé en ce que** la première pièce d'accouplement enfichable (11) et la deuxième pièce d'accouplement enfichable (61) présentent des saillies (12, 62) et/ou des cavités interagissantes.

2. Système de dosage selon la revendication 1, l'unité d'actionneurs (60) et l'unité fluidique (10) étant conçues de telle sorte que l'unité fluidique (10) puisse être couplée sur l'unité d'actionneur (60) dans au moins deux positions de rotation différentes (KP1, KP2, KP3) autour de l'axe d'enfichage (S).

3. Système de dosage selon l'une quelconque des revendications précédentes, comprenant un mécanisme (71), de préférence un mécanisme excentrique (71), qui est conçu pour presser la première pièce d'accouplement enfichable (11) et la deuxième pièce d'accouplement enfichable (61) l'une contre l'autre, dans une position d'enfichage, de préférence radiale par rapport à l'axe d'enfichage (S).

4. Système de dosage selon la revendication 3, le mécanisme (71), en particulier le mécanisme excentrique (71), agissant sur une pièce d'accouplement enfichable (11) située à l'intérieur des deux pièces d'accouplement enfichables (11, 61) et pressant celle-ci contre une paroi intérieure d'une pièce d'accouplement enfichable (61) située à l'extérieur des deux pièces d'accouplement enfichables (11, 61).

5. Système de dosage selon la revendications 3 ou 4, le mécanisme (71), en particulier le mécanisme excentrique (71), agissant de préférence par l'intermédiaire d'un élément de pression (75), sur au moins l'une des deux pièces d'accouplement enfichables (11, 61).

6. Système de dosage selon l'une des revendications précédentes, l'unité fluidique (10) présentant, en tant que première pièce d'accouplement enfichable (11), un embout de raccordement (13) et l'unité d'actionneurs (60) présentant, en tant que deuxième pièce d'accouplement enfichable (61), un logement (63) pour l'embout de raccordement (11) de l'unité fluidique (10).

7. Système de dosage selon l'une quelconque des revendications précédentes,
l'unité fluidique (10) présentant un dispositif de chauffage (40), pourvu de préférence d'un bloc chauffant (42) entourant une section de canal d'alimentation (53, 54) et/ou au moins une section de buse (16)
et/ou
l'unité d'actionneurs (60), de préférence la deuxième pièce d'accouplement enfichable (61), présentant un dispositif de chauffage qui de préférence (dans le cas d'une unité fluidique (10) couplée avec l'unité d'actionneur (60)) restitue la chaleur à une section de canal d'alimentation (53, 54) et/ou à une section de buse (16) de l'unité fluidique (10).

8. Système de dosage selon la revendication 7, la section de canal d'alimentation (53, 54) et/ou au moins la section de buse (16) étant fixées de manière amovible dans un bloc de matériau, de préférence dans le bloc de chauffage (42).

9. Système de dosage selon la revendication 8,
la section de canal d'alimentation (53, 54) et/ou la section de buse (16) étant fixées dans le bloc de matériau, de préférence le bloc chauffant (42), au moyen d'une vis de serrage (55),
et/ou
des sections de canal d'alimentation (53, 54) voisines et/ou la section de buse (16) étant pressées l'une dans l'autre sur leur côtés extrémités par des cônes d'étanchéité (58, 59), pour former une conduite d'alimentation continue.

10. Système de dosage selon l'une quelconque des revendications précédentes, l'unité d'actionneurs (60) et/ou l'unité fluidique (10) comprenant un dispositif de chauffage (40) et un raccord de commande de chauffage (49) , destinés à être connectés avec un système de commande de chauffage, ainsi qu'une unité de mémoire (44) dans laquelle sont mémorisées des données associées à l'unité d'actionneurs (60) et/ou à l'unité fluidique (10), en particulier au dispositif de chauffage (40), pour la commande du chauffage, de manière particulièrement préférée des paramètres de régulation pour la régulation du dispositif de chauffage (40) par le système de commande du chauffage.

11. Système de dosage selon l'une quelconque des revendications précédentes,
la deuxième pièce d'accouplement enfichable (61) pouvant être déplacée le long de l'axe d'enfichage (S) par rapport à d'autres composants de l'unité d'actionneur (60)
et/ou
la première pièce d'accouplement enfichable (11) étant réglable le long de l'axe d'enfichage (S) par rapport à d'autres composants de l'unité fluidique (10).

12. Système de dosage selon l'une quelconque des revendications précédentes, la première et/ou la deuxième pièces d'accouplement enfichables (11, 61) étant fabriquées sous la forme de pièces tournées.

13. Unité fluidique (10) pour un système de dosage (100) selon l'une quelconque des revendications précédentes, l'unité fluidique (10) comprenant une buse (20), un élément (30) logé de manière mobile et une première pièce d'accouplement enfichable (11), laquelle peut être enfichée le long d'un axe d'enfichage (S) dans ou par l'intermédiaire d'une deuxième pièce d'accouplement enfichable (61) d'une unité d'actionneurs (60) du système de dosage (100) et peut être accouplée en soi avec celle-ci, pour coupler de manière amovible l'unité fluidique (10) avec l'unité d'actionneurs (60), laquelle comprend un système d'actionneurs (90) pour actionner l'élément mobile de l'unité fluidique (10), **caractérisée en ce que** la première pièce d'accouplement enfichable (11) et la deuxième pièce d'accouplement enfichable (61) comprennent des saillies (12, 62) et/ou des cavités interagissantes.

14. Unité d'actionneur (60) pour un système de dosage (100) selon l'une des revendications 1 à 12 précédentes, l'unité d'actionneur (60) présentant une deuxième pièce d'accouplement enfichable (61), qui peut être enfichée le long d'un axe d'enfichage (S) dans une ou au-dessus d'une première pièce d'accouplement enfichable (11) d'une unité fluidique (10) du système de dosage (100) et peut être couplée en soi avec cette dernière, pour coupler l'unité fluidique (10), qui comporte une buse (20) et un élément (30) logé de manière mobile avec l'unité d'actionneurs (60), de telle sorte qu'un système d'actionneurs (90) de l'unité d'actionneurs (60) puisse actionner l'élément (30) logé de manière mobile de l'unité fluidique (10), **caractérisée en ce que** la première pièce d'accouplement enfichable (11) et la deuxième pièce d'accouplement enfichable (61) comportent des saillies (12, 62) et/ou des cavités interagissantes.

15. Procédé de couplage amovible d'une unité fluidique (10) avec une unité d'actionneurs (60) d'un système de dosage (100) l'unité fluidique (10) présentant une buse (20) ainsi qu'un élément (30) logé de manière mobile et l'unité d'actionneurs (60) présentant un système d'actionneurs (90) pour actionner l'élément mobile (30) de l'unité fluidique (10), des pièces d'accouplement enfichables (11, 61) de l'unité fluidique (10) et de l'unité d'actionneurs (60) étant enfichées l'une dans l'autre le long d'un axe d'enfichage (S) et étant couplées en soi l'une avec l'autre, une première pièce d'accouplement enfichable (11) et une deuxième pièce d'accouplement enfichable (61) présentant des saillies (12, 62) et/ou des cavités interagissantes.
